# EUROPEAN PATENT SPECIFICATION

(11) **EP 1 429 532 B1**
(45) Date of publication and mention of the grant of the patent: **14.03.2012**
(21) Application number: 03028703.1
(22) Date of filing: 12.12.2003
(51) Int. Cl.: H04N 1/00

(54) **Image processing method and image processing system using the same**
Bildverarbeitungsverfahren und Bildverarbeitungssystem unter Verwendung desselben
Procédé de traitement d'image et système de traitement d'image utilisant le même

(30) Priority: 12.12.2002 JP 2002360983; 14.03.2003 JP 2003070527
(43) Date of publication of application: 16.06.2004
(73) Proprietor: Seiko Epson Corporation, Shinjuku-ku Tokyo 163-0811 (JP)
(72) Inventor: Endo, Masakatsu, Suwa-shi,Nagano 392-8502 (JP); Morozumi, Hideki, Suwa-shi, Nagano 392-8502 (JP); Sakuda, Kenji, Suwa-shi, Nagano 392-8502 (JP); Suenaga, Kazunori, Suwa-shi, Nagano 392-8502 (JP); Oyanagi, Makoto, Suwa-shi, Nagano 392-8502 (JP); Wakai, Yoichi, Suwa-shi, Nagano 392-8502 (JP); Katayama, Toshihiko, Suwa-shi, Nagano 392-8502 (JP)
(74) Representative: Winter, Brandl, Fürniss, Hübner, Röss, Kaiser, Polte - Partnerschaft

(56) References cited:
- EP-A- 1 199 874
- EP-A- 1 204 030
- WO-A1-02/084999
- PATENT ABSTRACTS OF JAPAN vol. 2003, no. 03, 5 May 2003 (2003-05-05) & JP 2002 330394 A (CANON INC), 15 November 2002 (2002-11-15)

## Description

### BACKGROUND OF THE INVENTION

The present invention relates to an image processing system and an image processing method, wherein control information and image data files are transmitted over a communication path, and images based on the image data files which are stored in an image supply device, are output by way of an image output device.

Japanese Patent Publication No. 2002-330394A discloses a so-called direct print system, wherein a digital still camera is connected to a printer without involvement of a personal computer or the like, and images captured by the digital still camera are printed by the printer.

In the direct print system, image data, a print job start command, and the like are exchanged between the digital still camera and the printer through use of a protocol unique to a vendor.

However, since each vendor may use its own protocol, images captured by a digital still camera can be printed by a printer of a certain vendor but may not be printed by a printer of another vendor. In such a case, if a single protocol is used by a plurality of vendors, images captured by a digital still camera could be printed by a printer of any of the vendors. However, a printer has functions unique to each vendor, and difficulty is encountered in the use of a complete single protocol. Further, printer's functions evolve year by year. Once a standard protocol has been prescribed, addition of a new function becomes difficult.

A Direct Print Standard, DPS, has been developed, as described in "http://www.dpreview.com/news/0212/02120101dps.asp".

With DPS, a compatible camera can be directly connected to a compatible printer. DPS specifies an application layer protocolThe DPS version o.9 is written for USB as a physical transport and Picture Transfer Protocol as data transfer protocol.

EP 1 204 030 A1 relates to extending hypermedia documents by adding tag attributes. Undefined tags and tag attributes are embedded in a web page written in HTML. The web page includes a script which interprets the undefined attributes to perform a predefined action. The undefined tag attributes can refer to elements of a data source such as a stock and the current value of the stock. The interpreted attributes are used to retrieve the stock and value of interest from a real-time data source, and to write the values into the web page, so that they are displayed in the form of a real-time data stream.

### SUMMARY OF THE INVENTION

It is an object of the invention to provide an image processing system and an image processing method, which facilitate revision of the protocol after prescription of the protocol while ensuring compatibility between a plurality of vendors.

In order to achieve the above object, according to the invention, there is provided a direct printing method as defined in claim 1.

In accordance with a further aspect, a direct printing system is provided as claimed in claim 6.

In accordance with other aspects, a printer and a digital camera are provided as defined in claims 8 and 9, respectively.

A computer program product is claimed in claim 10.

Some implementation details are described in the dependent claims.

In such a configuration, an extended function can be readily added to the protocol after prescription while compatibility among a plurality of vendors is maintained.

The extension tag may be inserted at a lower nest level than the existing tag.

In such a configuration, a determination can be made readily as to whether or not the extension function is provided.

he extension tag may be associated with image data to be subjected to image processing in connection with the extended function.

In such a configuration, use of the extended function or non-use of the same can be switched on a per-image basis.

The markup language enables additional definition of a document form.

The script may include a control command for the image processing, a response for the control command, and a notification of a status of the image output device, which are described by the markup language.

Optionally, the control information item does not contain the image data therein.

In such a configuration, the control information item can be communicated independently of the image data to be subjected to the image processing, without changing an existing format of the image data.

A position of the extension tag in the script may be prior to the existing tag.

In such a configuration, since the extension tag is interpreted first at the time of interpretation of the script, the function of the existing tag can be readily invalidated.

Preferably, the extended tag specifies image processing unique to a vendor of the image supply device.

In such a configuration, image processing having characteristics, the characteristics changing from one vendor to another, can be specified at the time of image processing.

Here, control data pertaining to the image processing specified by the extension tag may be appended in a file storing the image data; and the image output device may perform the image processing with respect to the image data based on the control data.

The image output device, i.e. the printer, may perform the information processing specified by the extension tag among the information processing corresponding to the predetermined function, in a case where it is confirmed the extended function is valid.

In such a configuration, there can be readily added a function for selecting any one from previously-prepared image processing operations and subjecting image data to the thus-selected image processing.

The extension tag may specify image processing in which another image is combined with an original image of the image data.

In such a configuration, a function pertaining to a unique frame insertion can be readily added.

Here, the extension tag may specify image data for a frame image.

Here, the image output device may output an image in which the frame image is combined with the original image.

Here, it the image output device may output an image in which the frame image and the background image are combined with the original image.

In such a configuration, there can be readily added a function pertaining to the unique frame insertion which uses image data specified by the existing tag and data pertaining to the frame image specified by the extension tag.

An image processing method may further comprise steps of:
specifying, at the image output device, a type and a size of a recording medium specified by the control information item;
generating, at the image output device, an invalid notification using the extension tag, in a case where the recording medium specified by the control information item is invalid in the image output device; and
transmitting, to the image supply device, the invalid notification as a part of the control information item.

In such a configuration, when print paper of specified type (e.g., mat paper or photoprint paper) and specified size is not offered by a vendor or a third party, erroneous printing can be prevented.

There is also provided a computer program product comprising a computer program which causes a computer to serve as the communication controller and the script generator in the above image output device.

Further, there is also provided a computer program product comprising a computer program which causes a computer to serve as the communication controller and the script generator in the above image supply device.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a block diagram showing an image output system according to a first embodiment of the invention;
Fig. 2 is a view showing an example protocol used between an image output device and an image supply device in the image output system in the first embodiment;
Fig. 3 is a block diagram showing an exemplary configuration of a printer serving as an image output device in the image output system of the first embodiment;
Fig. 4 is a view showing relationships among a plurality of functions of the image output device in the image output system of the first embodiment;
Fig. 5 is a block diagram showing an exemplary configuration of a digital camera serving as an image supply device in the image output system of the first embodiment;
Fig. 6 is a view showing relationships among a plurality of functions of the image supply device in the image output system of the first embodiment;
Fig. 7 is a view for describing image output processing on the DPS protocol level in the image output system of the first embodiment;
Fig. 8 is a view for describing image output processing on the image transfer protocol level in the image output system of the first embodiment;
Fig. 9 is a view showing an example XML script for an image output job start command employed in the first embodiment;
Fig. 10 is a view showing an example XML script for a file acquisition command employed in the first embodiment;
Fig. 11 is a view showing parameters of image processing control data used by an PIM function and example values of the parameters;
Fig. 12 is a view showing an example configuration of an image file;
Fig. 13 is a view showing a data structure of a manufacturer's note in the image file;
Fig. 14 is a view showing a data structure of print mapping data defined in the manufacturer's note shown in Fig. 13;
Fig. 15 is a flowchart for describing generation of an XML script serving as control information when a PIM function exists as an extended function of an image optimizing function in the image output system of the first embodiment;
Fig. 16 is a view showing an example image output job start command produced by an image supply device provided in the image output system of the first embodiment;
Fig. 17 is a view showing another example image output job start command produced by an image supply device provided in the image output system of the first embodiment;
Fig. 18 is a view for describing the concept of a PIF function;
Fig. 19 is a view showing an example printed image obtained in the case of PIF printing;
Fig. 20 is a view showing an example layout definition file; and
Fig. 21 is a view showing an example print job start command produced by an image supply device provided in an image output system according to a second embodiment of the invention.

### DETAILED DESCRIPTION OF THE INVENTION

Preferred embodiments of the invention will be described hereinbelow with reference to the accompanying drawings.

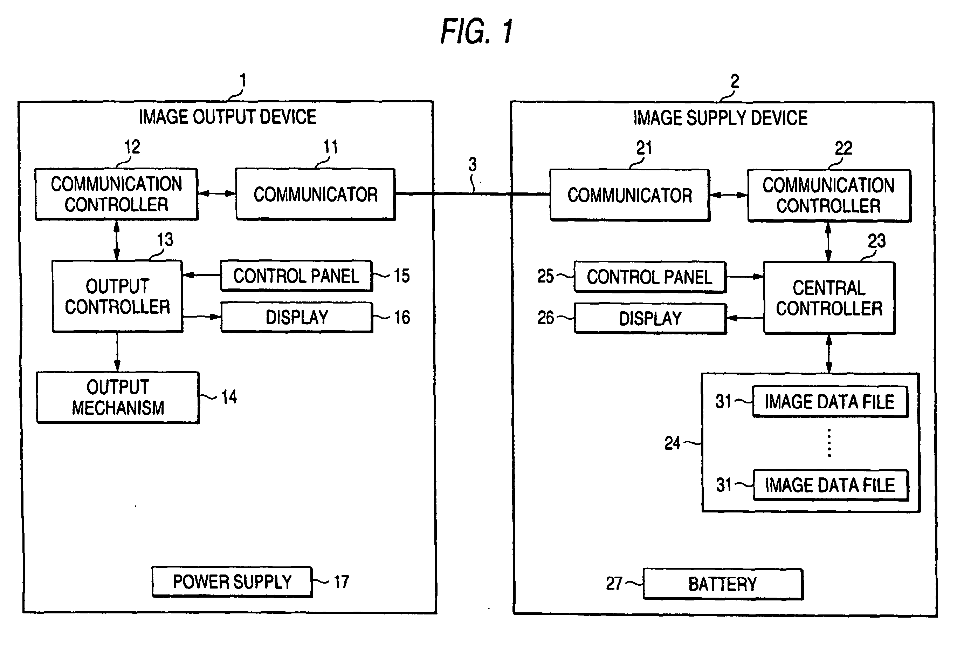

Fig. 1 shows an image output system according to a first embodiment of the invention. This image output system can be taken as one type of so-called direct print system. In this embodiment, an image output device 1 is a device for outputting images on the basis of image data. The image output device 1 is embodied in the form of a printer or the like which prints images on paper on the basis of image data. An image supply device 2 is a device capable of storing image data and transmitting image data as required. The image supply device 2 is embodied in the form of a digital still camera or the like which stores captured images on a predetermined storage medium as image data.

A communication path 3 is a transmission medium for connecting the image output device 1 to the image supply device 2. The communication path 3 is not limited to a cable communication path, and a wireless communication path may also be employed. In the first embodiment, a universal serial bus (USB) cable is used as the communication path 3. In a case where the communication path 3 is a cable communication path, an unillustrated connector is provided on the image output device 1 and the image supply device 2, thereby connecting connectors provided on respective ends of the cable of the communication path 3 to connectors of the devices 1 and 2.

In the image output device 1 shown in Fig. 1, a communicator 11 is a circuit for communicating various information items as electrical signals via the communication path 3. A communication controller 12 is a circuit or device which controls the communicator 11 to exchange information with a mating device in accordance with various protocols. The communicator 11 and the communication controller 12 exchange, by way of the communication path 3, control information pertaining to an image output as a series of scripts described in markup languages.

An output controller 13 is a circuit or device which controls and monitors an output mechanism 14, thereby controlling image output processing (i.e., print processing in a case where the image output device 1 is a printer). The output mechanism 14 is a mechanical and/or electrical constitution section for outputting images. In the case of a printer, the output mechanism 14 corresponds to a print mechanism and a paper feed mechanism. The output controller 13 and the output mechanism 14 output an image on the basis of image data.

A control panel 15 is a circuit or device which is to be manipulated by the user and outputs a signal in response to manipulation. Various switches or a touch panel is used as the control panel 15, as required. A display 16 is a device for display various information items. Various indicators or a liquid-crystal display is used as the display 16, as required.

A power supply 17 is a circuit which is connected to commercial power or an AC/DC converter and feeds supplied power to internal circuits.

In the image supply device 2 shown in Fig. 1, a communicator 21 is a circuit which exchanges various information items in the form of electrical signals by way of the communication path 3. A communication controller 22 is a circuit or device which controls the communicator 21 to exchange information with a mating device in accordance with various protocols. The communicator 21 and the communication controller 22 exchange, by way of the communication path 3, control information pertaining to an image output as a series of scripts described in markup languages.

A central controller 23 is a circuit or device which performs various processing operations while exchanging various information items with circuits or devices having various functions, such as the communication controller 22 and a storage medium 24.

The storage medium 24 is a device which stores at least one image data file 31. The image data file 31 is a file which includes image data pertaining to, e.g., images captured by a digital camera, or other images. The format of the image data is, e.g., a JPEG (Joint Photographic Experts Group) format or an EXIF (Exchangeable Image File) format.

Semiconductor memory, a memory card using semiconductor memory, a magnetic storage medium, an optical storage medium, or an electro-optical storage medium is used as the storage medium 24. The storage medium may be fixed or removably attached to the image supply device 2.

A control panel 25 is a circuit or device which is to be manipulated by the user and outputs a signal in response to manipulation. Various switches or a touch panel is used as the control panel 25, as required. A display 26 is a device for display various information items, such as images based on image data. Various indicators or a liquid-crystal display is used as the display 26, as required.

A battery 27 supplies power to internal circuits of the image supply device 2. A storage battery or a disposable battery is used as the battery 27. When the image supply device 2 is a device requiring portability, the battery 27 is provided as a power source. When the image supply device 2 is a device which does not require portability, a power supply as well as the power supply 17 of the image output device 1, may be provided as a power source.

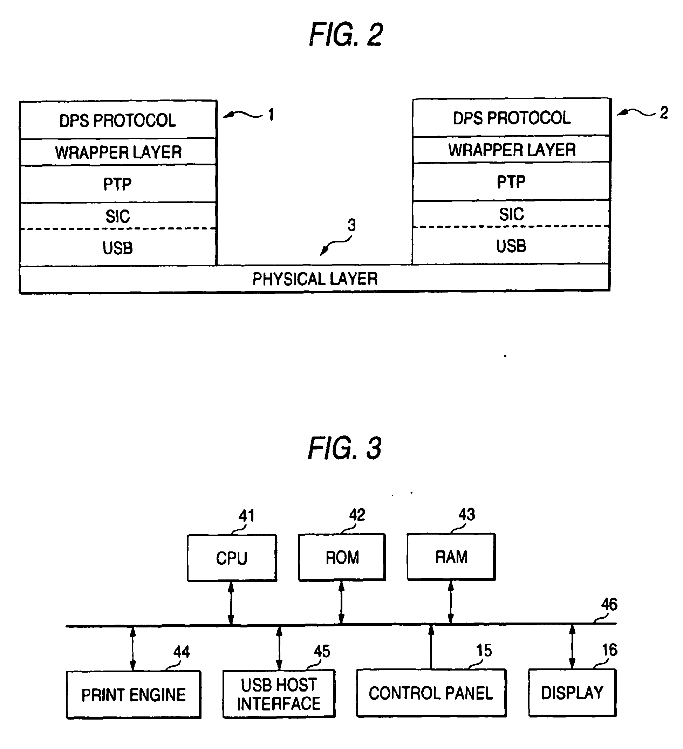

Fig. 2 shows an example protocol used between the image output device 1 and the image supply device 2.

As shown in Fig. 2, in the first embodiment, the communication path 3; that is, a USB cable, is used as a physical layer. In the image output device 1 and the image supply device 2, both pertaining to the first embodiment, a USB layer is adopted as a layer for controlling the physical layer. A still image capture device class (SIC) is used as a USB class. As a result, a data transmission path is realized. In relation to the USB standards, USB 1.1 and USB 2.0 are currently in use. However, the next version or subsequent versions, which would be proposed in future, may also be used, or a communication standard equivalent to the USB may also be used instead. When a USB is used for the communication path 3, the image output device 1 serves as a host, and the image supply device 2 serves as a device.

A picture transfer protocol (PTP) is used at a higher level for specifying control of a digital still picture device (DSPD) from the outside or transfer of image data to the outside of the digital still picture device (DSPD). "PIMA15740:2000" proposed by Photographic and Imaging Manufacturers Association, Inc is available as a set of PTP standards. Here, PTP is a protocol which offers a communications system for exchanging image data between DSPDs. In relation to the PTP, an object (e.g., an image data file) stored in a storage is specified not by a path but by an object ID (i.e., an object handle).

In the first embodiment, a direct print service (hereinafter abbreviated as "DPS") protocol is used at a higher level of the PTP for supplying image data stored in the image supply device 2, such as a digital camera, directly to the image output device 1, such as a printer, by way of the communication path 3, to thereby perform printing operation. In relation to the DPS protocol, control information about an image output is exchanged as a series of scripts described in an markup language (here, XML: Extensible Markup Language) between the image output device 1 and the image supply device 2 by way of the communication path 3.

Control information pertaining to an image output includes various commands pertaining to image output processing, responses to the commands, and notification of statuses of devices. The script includes only control information and does not include any image data which are objects of image output operation. Specifically, the script includes information about a location for storing image data files, but does not include image data.

A low-level layer of the DPS protocol is not limited to the PTP. Therefore, a wrapper layer is provided between the DPS protocol and a low-level layer (here a PTP) for achieving consistency between the DPS protocol and low-level layers of a plurality of types.

In the first embodiment, among the previously-described protocols, the physical layer is embodied by the communicator 11, the communication path 3, and the communicator 21. The USB layer is embodied by the communicator 11 and the communicator 21. The PTP layer, the wrapper layer, and the DPS protocol layer are realized by the communication controller 12 and the communication controller 22.

Specifically, each of the communication controllers 12, 22 serves as a first entity for interpreting a DPS protocol, which is an image output control protocol to be used for exchanging control information pertaining to image output described in markup languages; a second entity for interpreting a PTP, which is an image data file management/transfer protocol located at a level lower than the first entity, and used for managing the image data stored in the image supply device 2 and transferring the image data to the image output device 1; and a third entity which is located at a level lower than the second entity for controlling a physical layer of the communication path 3. Here, the term "entity" refers to a substance for realizing a communications function relating to a certain protocol.

The wrapper layers in the respective communication controllers 12, 22 effect a protocol conversion between an image output control protocol and an image data file management/transfer protocol of the first entity, both protocols being suitable for the type of the image data file management protocol of the second entity. Namely, the wrapper layers of the respective communication controllers 12, 22 replace a high-level protocol (DPS protocol) command with a low-level protocol (PTP) command, as required.

Fig. 3 shows an example configuration of a printer serving as the image output device 1. In the printer, a CPU 41 is a device which executes a program, to thereby perform processing described in the program. A ROM 42 is a memory which stores programs and data in advance. A RAM 43 is a memory which temporarily stores a program and data when executing the program.

A program to be used for producing print control data from image data and a program for effecting communication in accordance with a DPS protocol and an image transfer protocol are stored, as programs to be executed by the CPU 41, in the ROM 42 or another unillustrated storage medium.

A print engine 44 is a circuit or device which controls the output mechanism 14, to thereby perform print processing in accordance with the print control data supplied from the CPU 41.

A USB host interface 45 corresponds to the communicator 11 shown in Fig. 1 and is a host interface circuit which is specified by the USB.

A bus 46 is a signal channel for interconnecting the CPU 41, the ROM 42, the RAM 43, the print engine 44, the USB host interface 45, the control panel 15, and the display 16. The number of buses 46 and a topology of connection of the CPU 41 and the print engine 44 to the bus 46 are not limited to those shown in Fig. 3.

The control panel 15 and the display 16, which are shown in Fig. 3, are analogous to those shown in Fig. 1.

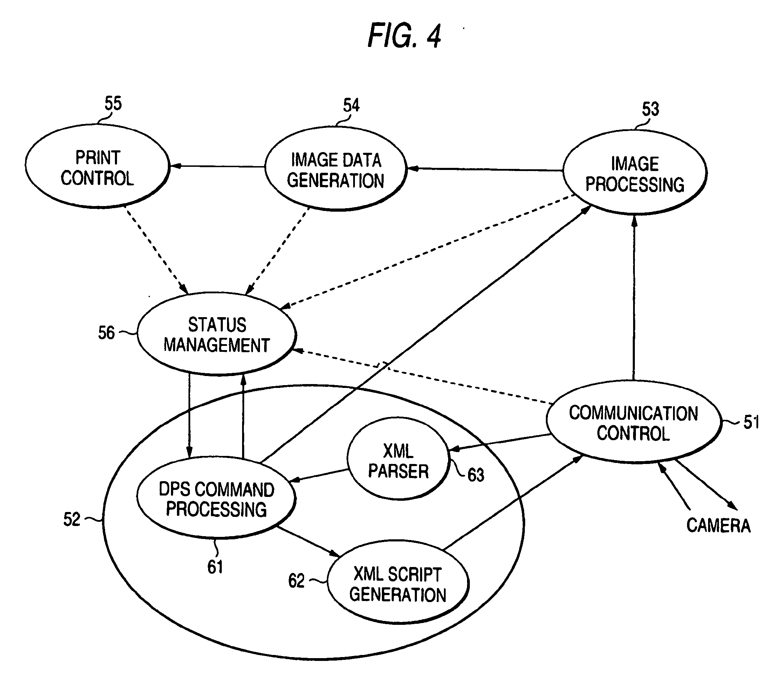

Fig. 4 shows relationships between a plurality of functions of the image output device 1. A communication control function 51 is a function for effecting communication control under an image transfer protocol.

A DPS protocol processing function 52 includes a DPS command processing function 61, which produces and interprets control information specified by the DPS protocol; an XML script generating function 62, which produces an XML script corresponding to the control information; and an XML server 63, which subjects to syntax analysis the control information described in an XML.

The XML server 63 may be designed to enable analysis of all syntaxes in an XML or analysis of only syntaxes used in the DPS protocol. In such a case, the only requirement for the XML server 63 is to be able to discern only a tag required to describe an XML script related to the DPS protocol.

The XML script generating function 62 may be set so as to previously store templates of XML scripts in the ROM 42 according to the types of control information items, such as commands, and to generate an XML script showing control information by editing the template.

An image processing function 53 is a function for changing the format of image data. A print data generating function 54 is a function for generating print control data from image data whose format has been changed. A print control function 55 is a function for performing print processing in accordance with the print control data.

A status management function 56 is a function for monitoring processing statuses of the previously-descried respective functions.

The functions are realized by the CPU 41 executing the program.

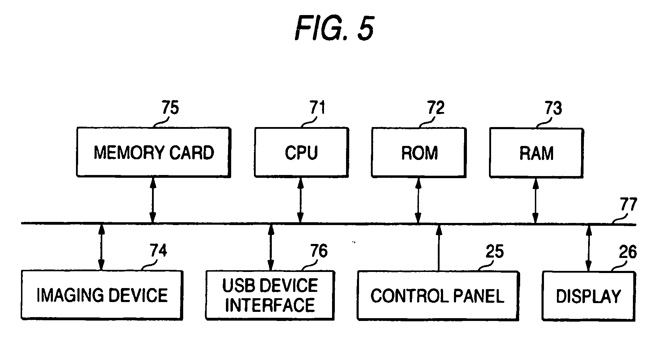

Fig. 5 shows an example configuration of a digital camera serving as the image supply device 2. In the digital camera, a CPU 71 is a device which executes a program, to thereby perform processing described by the program. A ROM 72 is a memory for storing programs and data in advance. A RAM 73 is a memory for temporarily storing a program and data when executing the program.

A program to be used for controlling individual sections during photographing operation and a program for effecting communication and management of image data in accordance with a DPS protocol and an image transfer protocol are stored, as programs to be executed by the CPU 71, in the ROM 72 or another unillustrated storage medium.

An imaging device 74 images a subject in accordance with a command from the CPU 71 and outputs obtained image data.

The memory card 75 corresponds to the storage medium 24 shown in Fig. 1 and is a storage medium for storing image data obtained through imaging. Semiconductor memory or a magnetic recording device, which is fixed in a device, may be used in place of the memory card 75.

A USB device interface 76 corresponds to the communicator 21 shown in Fig. 1 and is a device interface circuit specified by the USB.

A bus 77 is a signal channel for interconnecting the CPU 71, the ROM 72, the RAM 73, the imaging device 74, the memory card 75, the USB device interface 76, the control panel 25, and the display 26. The number of buses 77 and the topology of connection of the CPU 71 to the bus 77 are not necessarily limited to those shown in Fig. 5.

The control panel 25 and the display 26, which are shown in Fig. 5, are analogous to those shown in Fig. 1.

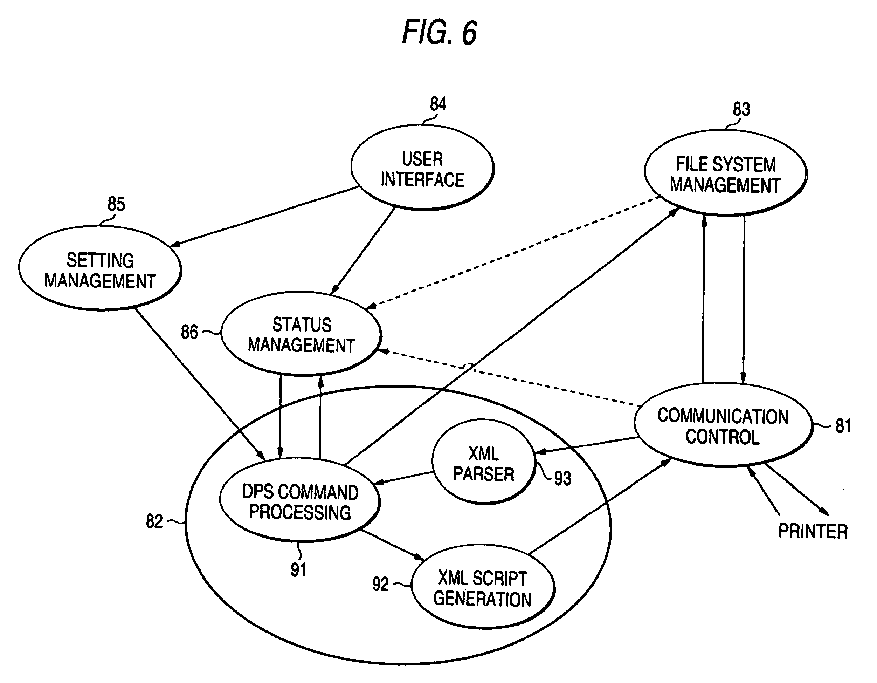

Fig. 6 shows relationships between a plurality of functions of the image supply device 2. A communication control function 81 is a function for effecting communication control under an image transfer protocol.

A DPS protocol processing function 82 includes a DPS command processing function 91, which produces and interprets control information specified by the DPS protocol; an XML script generating function 92, which produces an XML script corresponding to the control information; and an XML server 93, which subjects to syntax analysis the control information described in an XML.

The XML server 93 may be designed to enable analysis of all syntaxes in an XML or analysis of only syntaxes used in the DPS protocol. In such a case, the only requirement for the XML server 93 is to be able to discern only a tag required to describe an XML script related to the DPS protocol.

The XML script generating function 92 may be set so as to previously store templates of XML scripts in the ROM 72 according to the types of control information items, such as commands, and to generate an XML script showing control information by editing the template.

A file system management function 83 is a function which stores image data as an image data file 31 in the memory card 75 serving as the storage medium 24, in accordance with a predetermined directory structure and a file structure.

A user interface function 84 is a function for accepting operation of the control panel 25 performed by the user and displaying various information items on the display 26.

A setting management function 85 is a function for setting requirements, such as print processing, in accordance with the user's operation. A status management function 86 is a function for monitoring processing statuses of the aforementioned functions. These functions are realized by the CPU 71 executing the program.

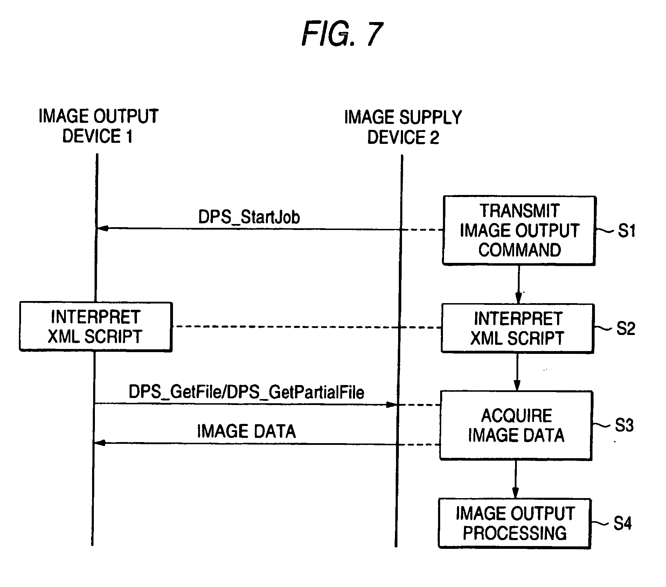

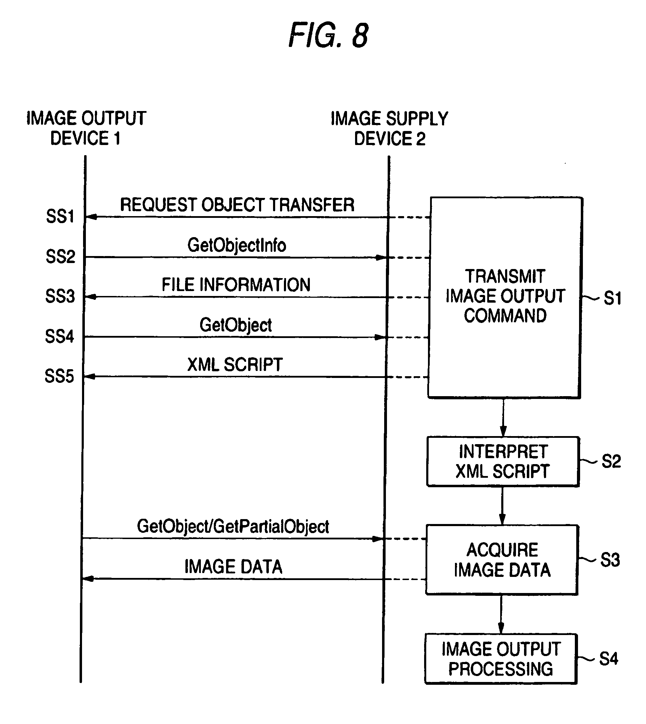

Operations of the individual devices in the system will now be described. Fig. 7 shows image output processing at the DPS protocol level. Fig. 8 shows image output processing at the image transfer protocol level.

The image output device 1 and the image supply device 2 each store files of predetermined names. In a case where the image output device 1 and the image supply device 2 are physically connected together by the user by way of the communication path 3, it is detected that an equipment complying with the DPS protocol is connected as a mating device when the files are detected on the basis of the PTP. As a result, one of the image supply device 1 and the image output device 2 assures that the other one uses the same protocol.

After connection processing, the image output device 1 and the image supply device 2 mutually exchange environmental information including information about the version of the DPS protocol, the name of the vendor, version information unique to the vendor, the product name, a serial number, and the like.

The image supply device 2 acquires, from the image output device 1, selectable settings; i.e., options, in relation to respective functions of the image output device 1 which can be set by the image supply device. When the image output device 1 is a printer, the functions include the setting of print quality, the setting of a paper size, the setting of a print type, the setting of a file format of an image data file, settings for printing of a date, settings for printing of a file name, the setting of image optimization processing, the setting of a print layout, settings for fixed-size printing, and settings on cropping. When the image output device 1 has extensions for the respective functions, options of the settings pertaining to the respective functions, including the extensions as options, may be collectively reported to the image supply device 2.

After then, when a predetermined operation has been performed by way of, e.g., the control panel 25, the image supply device 2 transmits an image output job start command to the image output device 1 by way of the communication path 3 (step S1).

At that time, in the image supply device 2, the communication controller 22 produces and transmits an XML script of an image output job start command "DPS_StartJob" in accordance with the DPS protocol. Here, image data which are objects of image output are specified within the XML script.

The image output job start command "DPS_StartJob" includes the next job requirement setting information and image output information.

As required, the job requirement setting information include quality information for setting the quality of an image output pertaining to a current job, paper type information pertaining to a current print job, paper size information pertaining to a current print job, image format information, image processing setting information, and page layout information.

As required, the image input information include cropping area information for specifying an area required when cropping operation is performed, an object ID of image data, copy number information pertaining to each image, a job ID unique to each job, path information pertaining to image data or a job specification file, and repeated supply count information pertaining to each image data (i.e., information showing the number of times identical image data are consecutively supplied to the image output device 1).

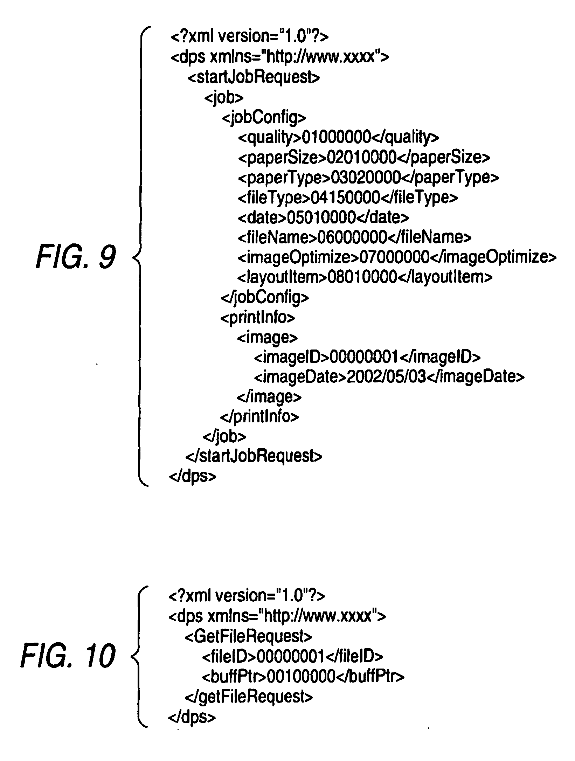

Fig. 9 shows an example XML script of an image output job start command "DPS_StartJob". A job tag is a tag to be used for specifying one job. Here, when a reference is made to an XX tag, the tag designates both a <XX> tag and a </XX> tag (the same also applies to any counterparts in the following descriptions). A jobConfig tag and a printInfo tag are arranged below the job tag. The jobConfig tag is for specifying job requirement setting information.

In the script shown in Fig. 9, a quality tag, a paperSize tag, a paperType tag, a fileType tag, a date tag, a fileName tag, an imageOptimize tag, and a layoutltem tag are arranged below the jobConfig tag.

The quality tag is for specifying quality information, such as a standard, a draft, or a fine. The paperSize tag is for specifying paper size information pertaining to a current job, such as an A4-size. A paper size is specified by a predetermined numeral (e.g., 02010000). The paperType tag is for specifying paper type information pertaining to a current job, such as standard paper or photographic paper. The paper size is specified by a predetermined numeral (e.g., 03020000). The fileType tag is for specifying image format information pertaining to a current job, such as EXIF, JPEG, TIFF, and GIF, and an image format is specified by a predetermined numeral (e.g.,04150000).

The date tag is for specifying whether or not date information specified by a printInfo tag is to be printed. The fileName tag is for specifying whether or not the file path information specified by the printInfo tag is to be printed. The "imageOptimize" tag is for specifying image optimization setting information showing whether or not image optimization is to be effected. The layoutltem tag is for specifying a page layout of a current job. An image format is specified by a predetermined numeral (e.g., 08010000).

The printInfo tag is for specifying image output information. An image tag is arranged at a position lower than the printInfo tag. The image tag is for specifying an image which is an object of image output. In the script shown in Fig. 9, an imageID tag and an imageDate tag are arranged at a position lower than the image tag. The imageID tag is for specifying an object ID of image data which are objects of image output. The imageDate tag is for designating a date to be printed beside an image.

The script shown in Fig. 9 includes only one image tag. However, in a case where a plurality of images are to be output, an image data object ID is specified for each of the plurality of images by the image tag. When a single image is to be output repetitively a plurality of times, a copies tag is arranged subsequent to an image tag of the image, whereby the number of times feeding operation to be repeated is specified.

A dps tag shown in Fig. 9 is a tag which shows an XML script pertaining to a DPS and takes, as an attribute, an URL (Uniform Resource Locator) which is a location at which name space information to be used for DPS is stored.

Logically, the communication controller 22 of the image supply device 2 transmits the XML script of the job start command in accordance with a DPS protocol. However, the communication controller 22 converts the XML script into a command of an image transfer protocol and processes that command on the image transfer protocol level.

Specifically, the communication controller 22 of the image supply device 2 first transmits a file transfer request command "RequestObjectTransfer" (step SS1) in accordance with the image transfer protocol. The command is transmitted to the image output device 1 by way of the USB layer and the physical layer.

In the image output device 1, the communication controller 12 transmits a command "GetObjectInfo" for inquiring an attribute of a file to be transferred upon receipt of the file transfer request command "RequestObjectTransfer" in accordance with the image transfer protocol (step SS2). The command is transmitted to the image supply device 2 by way of the USB layer and the physical layer.

In the image supply device 2, the communication controller 22 transmits file information about an XML script of a command "DPS_StartJob" (a file format, a file volume, or the like) upon receipt of a command "GetObjectInfo" in accordance with the image transfer protocol (step SS3). The file information is transmitted to the image output device 1 by way of the USB layer and the physical layer.

In the image output device 1, the communication controller 12 specifies the XML script upon receipt of the file information in accordance with the image transfer protocol, thereby transmitting a file acquisition command "GetObject" (step SS4). The file information is transmitted to the image supply device 2 by way of the USB layer and the physical layer.

In the image supply device 2, the communication controller 22 transmits a specified file (an XML script of a command "DPS_StartJob") upon receipt of the command "GetObject" in accordance with the image transfer protocol (step SS5). The file is transmitted to the image output device 1 by way of the USB layer and the physical layer.

In the image output device 1, the communication controller 12 receives the file in accordance with the image transfer protocol, thereby receiving the command "DPS_StartJob" at a DPS protocol layer.

Here, the image output device 1 is a printer shown in Figs. 3 and 4. In a case where the image supply device 2 is a digital camera shown in Figs. 5 and 6, communication under a DPS protocol is effected by the DPS protocol processing functions 52, 82 and communication control functions 51, 81. Communication under an image transfer protocol is performed between the communication control function 51 and the communication control function 81.

Next, the image output device 1 interprets an XML script of the acquired image output job start command (step S2), and image data which are objects of image output, the objects being described in the XML script, are acquired from the image supply device 2 (step S3).

In the first embodiment, after an image output job start command has been received from the image supply device 2, the image output device 1 controls a processing flow of the image output job. Specifically, the image output device 1 manages progress in image output processing, and information and image data, both being required for image output processing,. are acquired from the image supply device 2, as required.

At that time, in the image output device 1, the communication controller 12 specifies an image data file 31 by an object ID (corresponding to an object ID in the PTP) described in the XML script in accordance with the DPS protocol, thereby issuing the file acquisition command "DPS_GetFile" of the XML script. An object ID in a PTP pertaining to a certain object (i.e., an object handle) and an object ID in the DPS protocol may be set to a single value or different values. When the object IDs have different values, the object ID of the DPS protocol and the object ID of the PTP are mapped, as necessary.

Fig. 10 shows an example XML script of the file acquisition command "DPS_GetFile" used in the first command. The getFileRequest tag is a tag showing a file acquisition command. The filelD tag and a buffPtr tag are arranged at positions lower than the getFileRequest tag. The filelD tag is for specifying an object ID of a file which is an object of acquisition. The buffPtr tag is for specifying a pointer of a buffer to be used for receiving the acquired file.

The communication controller 12 converts the file acquisition command "DPS_GetFile" of the DPS protocol into a file acquisition command "GetObject" of the image transfer protocol and then transmits the thus-converted command. The command is transmitted to the image supply device 2 by way of the USB layer and the physical layer.

In place of the file acquisition command "DPS_GetFile" to be used for acquiring all files, a partial file acquisition command "DPS_GetPartialFile" to be used for acquiring a part of a file may be transmitted several times, to thereby acquire the overall file. In such a case, the partial file acquisition command "DPS_GetPartialFile" is converted into a command "GetPartialObject" of the image transfer protocol.

In the image supply device 2, the communication controller 22 reads a file (i.e., an image data file 31 ) of a specified object ID upon receipt of the command "GetObject" in accordance with the image transfer protocol and transmits the file. The file is transmitted to the image output device 1 by way of the USB layer and the physical layer.

In the image output device 1, when the communication controller 12 has received the file in accordance with the image transfer protocol, the file is also considered to have been received by the DPS protocol layer.

Here, when the image output device 1 is the printer shown in Figs. 3 and 4 and the image supply device 2 is the digital camera shown in Figs. 5 and 6, the DPS protocol processing function 52 and the communication control function 51, both belonging to the image output device 1, and the communication control function 81 and the file system management function 83, both belonging to the image supply device 2, are used for acquiring the image data.

In the image output device 1, when the image data are acquired, an image based on the image data is output (step S4). At that time, in the image output device 1, the output controller 13 and the output mechanism 14 perform the image output processing.

Here, when the image output device 1 is the printer shown in Figs. 3 and 4, the image processing function 53, the print data generating function 54, and the print control function 55 are used for image output processing.

In this embodiment, an extension tag to be used for adding an extended function after prescription of the protocol is used in the DPS protocol at the time of generation and exchange of control information.

When a certain function of the DPS protocol is extended, the image supply device 2 and the image output device 1 produce control information, which is an XML script, in accordance with an XML syntax, by insertion of an extension tag for specifying use of the extended function while an existing tag representing the function is left as is.

At that time, the image supply device 2 and the image output device 1 insert an extension tag into a nest level which is lower in level than the existing tag representing the function, or insert an extension tag in association with the existing tag which specifies image data to be processed by that function. For instance, the extension tag is inserted immediately before, immediately after, or into an element including the existing tag that specifies image data.

More specifically, in the image output device 1 serving as, e.g., a printer, the CPU 41 operates in accordance with a predetermined control program stored in a recording medium; e.g., the ROM 42. When a certain function of the DPS protocol remains extended, the existing tag representing the function is left in the XML script, and a script is generated by insertion of an extension tag corresponding to the extension. As mentioned above, the CPU 41 operates in accordance with a predetermined control program, thereby implementing an XML script generating function 62.

In the image supply device 2 serving as, e.g., a digital camera, a CPU 71 operates in accordance with a predetermined control program stored in a recording medium; e.g., the ROM 72. When a predetermined function of the DPS protocol remains extended, an existing tag representing the function is left in the XML script, and an extension tag corresponding to the extension is inserted, to thereby generate a script. As mentioned above, as a result of the CPU 71 operating in accordance with the predetermined control program, an XML script generating function 92 is implemented, and second script generation means is implemented by the XML script generating function 92.

In the first embodiment, an extension tag to be used for specifying use of image processing unique to the vendor is used as an extension tag for adding an extended function to the protocol after prescription of the protocol. Such image processing includes processing to be effected by an auto photo fine (APF) function, processing to be effected by a print image matching (PIM) function, and processing to be effected by an EXIF printing function.

In connection with the first embodiment, there will be described, as an example, a case where processing of an image, which is an object of image output, is extended by the PIM function.

First the PIM function will be described. By the PIM function, image data pertaining to an image captured by an imaging device, such as a digital camera, and output control data to be used for controlling an image output device, such as a color printer, at the time of outputting of an image are associated with each other and recorded as a single image file. The output control data include a print control command, image processing control data serving as a parameter to be used during image processing or the like. When supplied with image data and an image file having output control data, the image output device, such as a color printer, subjects the image data to image processing on the basis of the output control data, thereby outputting (printing) an image on the basis of the image data that have undergone image processing.

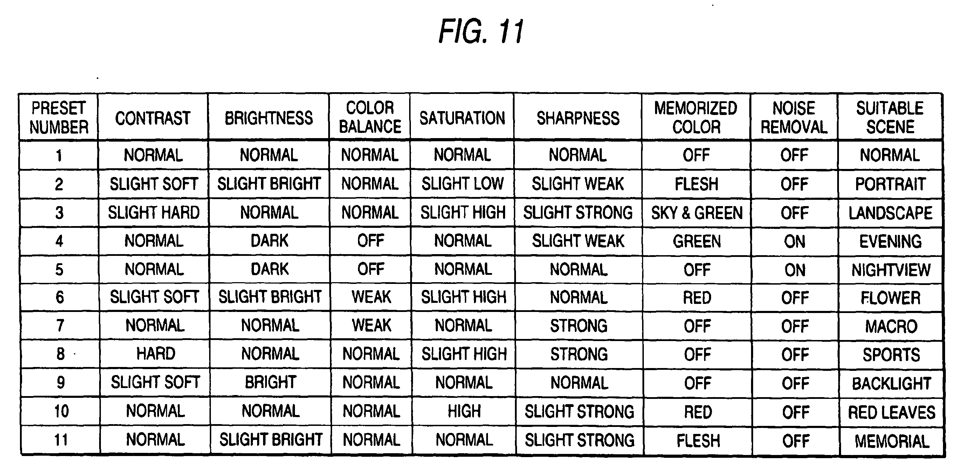

Values of respective parameters included in the image processing control data are set in accordance with a photographing scene. Fig. 11 is a view showing parameters of the image processing control data used for the PIM function and example values of the parameters. Preset parameters are prepared beforehand in accordance with eleven types of photographing scenes. These preset parameters include seven types of parameters; that is, "contrast", "brightness", "color balance", "saturation", "sharpness", "memorized color" and "noise removal". These preset parameters are prepared by the vendor of the digital camera. In addition, the user can set and register desired parameter sets. In addition to including the previously-described image processing control data, the image file also includes as output control data photographing requirements, such as a gamma value, a target color space, an exposure time set at the time of photographing operation, a white balance, a lens stop, a shutter speed, and a focal length of a lens, all belonging to a digital camera.

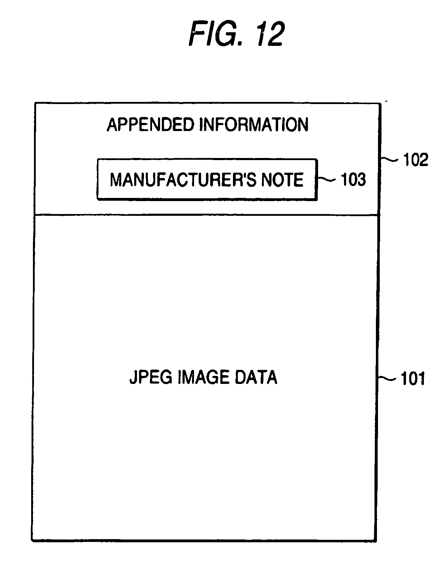

Fig. 12 is a view showing an example configuration of the image file. The image file has a file structure complying with an image file format standard (EXIF) for a digital camera. Specifications of the EXIF file are defined by the Japan Electronics and Information Technology Industries Association (JEITA). In the EXIF file, in addition to the image data which have been converted into a JPEG format, there is stored information pertaining to conditions when the image data is obtained, such as exposure information, lens stop information, GPS information or the like. The EXIF printing function enables printing with image processing based on the imaging conditions.

Specifically, the image file has an image data storage area 101 for storing image data, and an appended information storage area 102 for storing various appended information items pertaining to the stored image data. Image data are stored in the image data storage area 101, in a JPEG format. Appended information including a manufacturer's note 103 is stored in, e.g., a TIFF format, in the appended information storage area 102. The manufacturer's note 103 is stored in an undefined area opened to the manufacturers of digital cameras. In the first embodiment, the image processing control data are stored as the manufacturer's note 103. A file of EXIF format employs a tag for specifying respective data sets. A "makerNote" tag is allocated to the manufacturer's note 103.

In the first embodiment, the image file is determined as a file of EXIF format. However, the file format is not limited to the EXIF format. Any format can be employed, so long as the format has a structure for enabling integration of image data and image processing control data.

The manufacturer's note 103 includes print matching data to be described later. The print matching data correspond to image processing control data. A "printMatching" tag is allocated to the image processing control data.

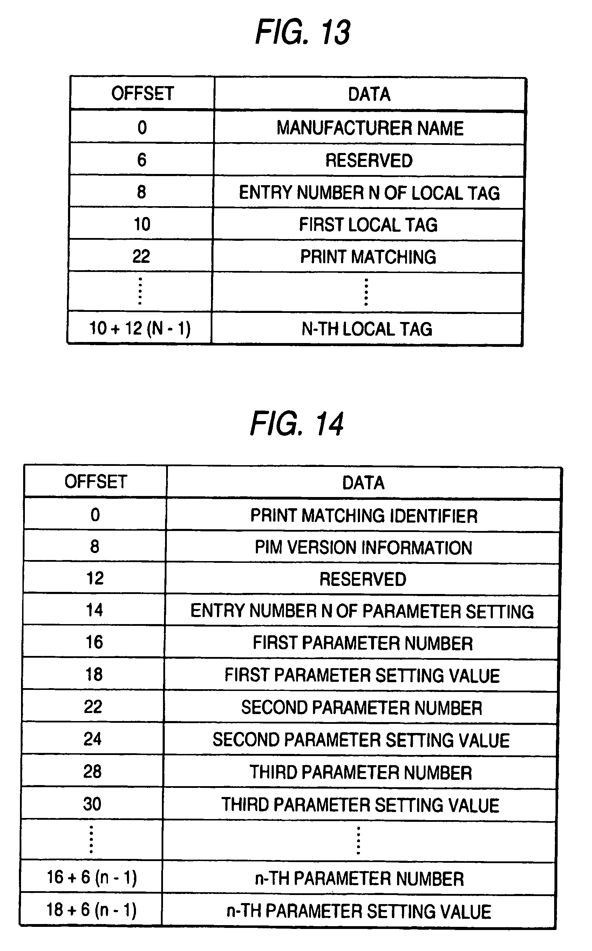

Fig. 13 is a view showing the data structure of the manufacturer's note 103 in the image file. Fig. 14 is a view showing the data structure of the print matching data defined in the manufacturer's note 103 shown in Fig. 13.

As shown in Fig. 13, areas in the manufacturer's note 103 where respective data sets are stored are specified by offset values derived from a top address in a data storage area of the manufacturer's note 103. The manufacturer's note 103 includes the name of a manufacturer (six bytes) at the top address, followed by a backup area (two bytes), the number of entries of a local tag (two bytes), and respective local tags (each having 12 bytes). The name of the manufacturer is appended with a terminal code "0x00" representing a character termination sequence.

The data structure of the print matching data shown in Fig. 13 is as shown in Fig. 14. The print matching data include a print matching identifier showing storage of a print matching parameter, the number of parameter settings "n" showing the number of parameters set in the print matching data, parameter numbers previously assigned to parameters which are objects of setting, and parameter setting values set in the parameters which are objects of setting. The parameter numbers are, e.g., two-byte information; and the parameter settings are four-byte information. The image output device acquires the parameter values set by the print matching data as image processing control data.

The image file pertaining to the PIM function is configured in the manner as mentioned above.

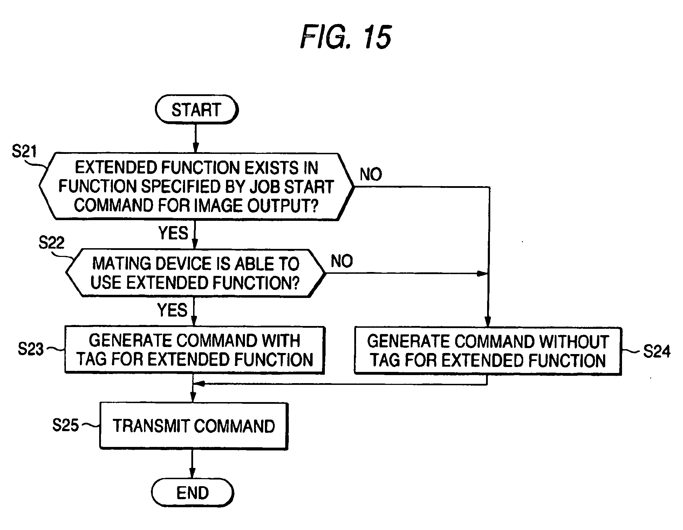

There will now be described generation of an XML script serving as control information when an image is output through use of the PIM function of the image output system according to the first embodiment. Fig. 15 is a flowchart for describing generation of an XML script serving as control information when a PIM function exists as an extended function of an image optimizing function which is one type of image processing function of the image output system according to the first embodiment.

When the image supply device 2 is taken as an imaging device, such as a digital camera having a PIM function, the previously-described image file having the image data and output control data is recorded on a recording medium 24 of the image supply device 2.

The image supply device 2 determines whether or not there is an extended function which can be used by the image optimizing function when the image optimizing function is specified under a situation where image output operation, such as printing, is performed in accordance with the user's operation (step S21).

When use of the PIM function is determined to be possible, the image supply device 2 determines, on the basis of the environmental information about the image output device 1 and/or optional setting values of the functions, whether or not the image output device 1 can use the PIM function, which is an extension of the image optimizing function that can be used by the image supply device 2 (step S22). For instance, the image supply device 2 determines whether or not the extended function is usable in accordance with version information unique to the vendor from among the environmental information items. Specifically, a determination as to whether or not the extended function is usable is indicated by the version information unique to the vendor.

When having determined the image output device 1 to be able to use the PIM function, the image supply device 2 inserts an "imageOptimize2" tag, which is an extension tag to be used for specifying image output through use of the PIM function, into a nest level which is lower in level than an image optimize tag, the tag being an existing tag for optimizing an image in the image output job start command "DPS_StartJob", thereby producing an XML script serving as control information (step S23). The name of the extension tag is not limited to "imageOptimize2" and can be freely specified by each vendor.

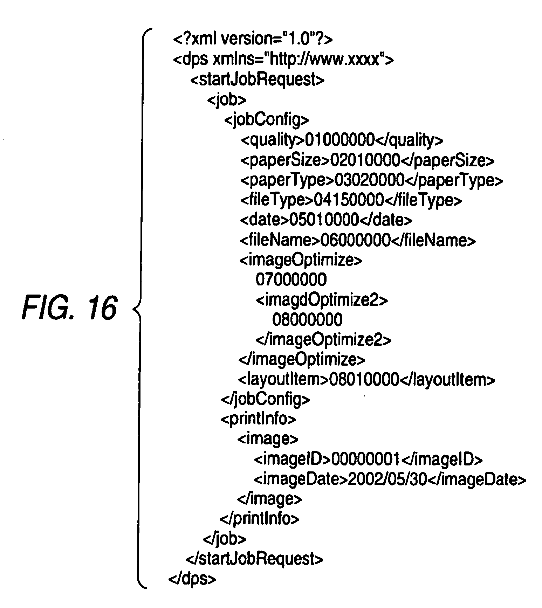

Fig. 16 is a view showing an example image output job start command "DPS_StartJob" generated by the image supply device 2. An element "<imageOptimize2> 08000000 </imageOptimize2>" including an "imageOptimize2" tag which is an extension tag is provided in an element "<imageOptimize> 07000000 </imageOptimize>" including the "imageOptimize" tag, which is an existing tag. A determination is made as to whether or not image output using the PIM function is to be executed, by a value ("08000000" in the embodiment) specified by the "imageOptimize2" tag, which is an extension tag. In this case, the object ID specified by the image ID tag is taken as an object ID of the previously-described image file including output control data.

When the image supply device 2 does not have any extended function that can use the image optimizing function and when the image output device 1 cannot use the extended function of the image optimizing function that the image supply device 2 can use, an image output job start command "DPS_StartJob" is generated without insertion of an extension tag (step S24).

The thus-generated image output job start command "DPS_StartJob" is transmitted to the image output device 1 from the image supply device 2 by way of the communication path 3 (step S25).

When the image output device 1 supplied with the image output job start command "DPS_StartJob" is a type complying with the image output using the PIM function, the image output device 1 ascertains the "imageOptimize2" tag as a tag for specifying the image output using the PIM function. On the basis of the value specified by the tag, the image output device 1 determines whether or not the image output using the PIM function (e.g., printing) is to be performed. When a determination is made that the image output using the PIM function is to be performed, the image output device 1 subjects image data of the image file to image processing on the basis of output control data pertaining to an image file acquired from the image supply device 2, thereby outputting (e.g., printing) an image on the basis of the image data that have undergone image processing.

If the image output device 1 is not a type complying with the image output using the PIM function, the image output job start command that does not include any extension tag is received, and an unextended function is used to perform image output operation in accordance with the image output job start command.

If an image output job start command including an extension tag is erroneously received in a case where the image output device 1 is not a type complying with the image output using the PIM function, the image output device 1 ascertains the "imageOptimize2" tag, which is an extension tag, as an undefined tag and ignores an element including the tag in accordance with the regulation of the XML, thereby outputting (e.g., printing) an image on the basis of the image data. At that time the image output device 1 determines whether or not image optimization operation is to be performed, on the basis of the value specified by the "imageOptimize" tag, which is an existing tag. When image optimization is determined to be performed, the image data in the image file may be subjected to predetermined image processing, thereby outputting an image on the basis of the image data that have undergone image processing.

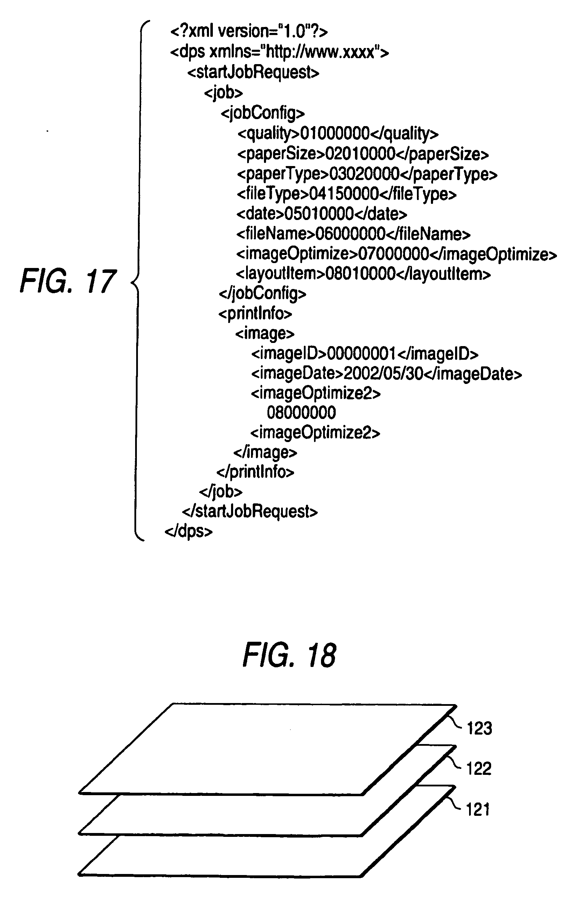

In the example image output job start command "DPS_StartJob" shown in Fig. 16, the extension tag is provided immediately below the existing tag. An element including the extension tag may be arranged for each image file. Fig. 17 is a view showing another example image output job start command "DPS_StartJob" generated by the image supply device 2. Aside from the element "<imageOptimize> 07000000 </imageOptimize>" including the "imageOptimize" tag which is an existing tag, an element "<imageOptimize2> 08000000 </imageOptimize2>" including the "imageOptimize2" tag, which is an extension tag, may be provided in association with an element including the image ID tag which specifies an image file. Even in such a case, a determination is made as to whether or not the image output using the PIM function is specified by the value ("08000000" in this embodiment) specified by the "imageOptimize2" tag, which is an extension tag. Further, the object ID specified by the imageID tag is taken as an object ID of the foregoing image file including output control data.

In the first embodiment, a determination is made as to whether or not the extended function is used in accordance with the value specified by the extension tag. Alternatively, settings may be effected such that the extended function is used by only the extension tag without specification of such a value. Namely, in such a case, when the extension tag is inserted, the extended function is executed.

In the first embodiment, a determination is made as to whether or not the extended function of image processing is to be performed on the basis of output control data in the image file, by an extension tag for the PIM function, and image processing control data provided in the image file are used for image processing. Alternatively, the value of the parameter in the output control data may be set directly by the extension tag for the PIM function.

In the first embodiment, when a certain function of the DPS protocol is extended, the image supply device 2 and the image output device 1 may generate control information by arranging an extension tag prior to the existing tag representing the function in the XML script constituting the control information, in accordance with an XML syntax. In this case, the extension tag is interpreted prior to interpretation of the script. Hence, the function of the existing tag can be made easy to invalidate.

In the first embodiment, image processing is performed on the basis of the output control data provided in the image file. Instead of or in addition to this, the image supply device 2 may specify parameters for image processing by an extension tag. When image processing is specified by the extension tag, the image output device 1 may subject image data to the image processing specified by the extension tag from among the predetermined image processing operations, thereby outputting an image on the basis of the image data that have undergone image processing.

As mentioned above, according to the first embodiment, when a predetermined function in the image output control protocol is extended at the time of generation of a series of scripts made by describing, in a markup language, control information pertaining to image output on the basis of the image output control protocol, the image output device 1 and the image supply device 2 generate a script by leaving within the scripts an existing tag representing the function and inserting an extension tag corresponding to the extension. The thus-generated scripts are exchanged between the mating device by way of the communication path 3.

As a result, a function can be easily added to the protocol after prescription of the protocol by utilization of a characteristic of the markup language while compatibility among a plurality of vendors is maintained. Specifically, when the equipment which interprets a script does not have any extended function, the equipment performs processing on the basis of an existing tag. In contrast, when equipment which interprets a script has an extended function, the equipment performs processing on the basis of a tag for the extended function.

According to the first embodiment, the image output device 1 and the image supply device 2 generate scripts by inserting an extension tag to a nest level lower than the existing tag within the script.

As a result, the tag of the extended function is arranged at a level lower than the tag of the existing function (i.e., between the start tag and the end tag), and hence a determination can be readily made as to whether or not the extended function is set for a certain function.

Further, according to the first embodiment, the image output device 1 and the image supply device 2; generate scripts by inserting an extension tag in association with the image data which are to be processed by the function extended in the script.

As a result, switching can be made, on a per-image basis, between use of the extended function and non-use of the extended function.

Further, according to the first embodiment, an XML which enables additional definition of a document type is used as a markup language for describing control information.

As a result, the function can be more readily added after prescription of the protocol by utilization of the extensibility of the syntax of the markup language.

Moreover, according to the first embodiment, the image output device 1 and the image supply device 2 communicate, as control information pertaining to image output and in the form of a series of scripts described in a markup language, a control command for image output processing, a response to the control command, and notification of a status of the device.

As a result, in relation to a control command, a response to the control command, and notification of status of the device, functions can be readily added to the protocol after prescription, by utilization of extensibility of the syntax of the markup language while compatibility between a plurality of vendors is maintained.

According to the first embodiment, the image output device 1 and the image supply device 2 communicate, as a series of scripts described in a markup language, a script which does not include image data to be an object of image output and includes only control information pertaining to image output.

As a result, the control information described in a markup language can be communicated independently of the data which are to become an object of image output, without modifying the existing format of data which are to be an object of image output.

According to the first embodiment, a tag for specifying image processing unique to the vendor is used as an extension tag.

As a result, image processing having various characteristics, the characteristics differing from one vendor to another, can be specified at the time of image output.

According to the first embodiment, when image processing is specified by the extension tag, the image output device 1 subjects image data to image processing on the basis of the image processing control data recorded on the file of image data, thereby outputting an image on the basis of the image data that have undergone image processing.

As a result, an image processing function using image files, the files having image data and image processing control data, can be readily added.

According to the first embodiment, when image processing is specified by the extension tag, the image output device 1 can subject image data to an image processing operation specified by the extension tag from among predetermined image processing operations, thereby outputting an image on the basis of the image data that have undergone image processing.

This case enables easy addition of the function for selecting any one from the previously-prepared image processing operations and subjecting image data to the selected image processing operation.

As mentioned above, according to the first embodiment, the image output device 1 and the image supply device 2 communicate control information pertaining to image output as a series of scripts described in a markup language by way of the communication channel 3. As a result, correction of the protocol after prescription can be facilitated by utilization of extensibility of the syntax of a markup language while compatibility among a plurality of vendors is maintained.

According to the first embodiment, each of the communication controllers 12, 22 serves as a first entity for interpreting a DPS protocol to be used for exchanging control information pertaining to image output described in a markup language; a second entity which is located at a level lower than the first entity and interprets a PTP to be used for managing the image data file stored in the image supply device 2 and transferring the image data to the image output device 1; and a third entity which is located at a level lower than the second entity and controls a physical layer (a USB in this embodiment) of the communication channel 3. As a result, various existing protocols can be used at hierarchical levels lower than the PTP. When correction of a protocol pertaining to image output is desired after the protocol has been prescribed, the only requirement is to amend the DPS protocol, and hence the amount of correction can be reduced.

According to the first embodiment, the communication controllers 12, 22 convert the DPS protocol of the first entity into the image data file management transfer protocol or vice versa in accordance with the kind of image data file management transfer protocol of the second entity (PTP in the embodiment) at a wrapper layer. As a result, the wrapper layer absorbs a difference between the adopted image data file management transfer protocols. Hence, when correction of a protocol pertaining to image output is desired after having been prescribed, the only requirement is to amend the image output control protocol without involvement of any substantial corrections on the wrapper layer, and hence the amount of correction can be reduced.

According to the first embodiment, the communication controllers 12, 22 communicate, as control information pertaining to image output and in the form of a series of scripts described in a markup language, a control command for image output processing, a response to the control command, and notification of a status of the device (including a job status). As a result, a control command which is on a text basis and easy to read, a response to the control command, and notification of status of the device can be communicated, and the protocol can be made easy to correct after prescription while compatibility between a plurality of vendors is maintained.

According to the first embodiment, the communication controllers 12, 22 communicate, as a series of scripts described in a markup language, a script which does not include image data to be an object of image output and includes only control information pertaining to image output. As a result, the control information described in a markup language can be communicated independently of the data which are to become an object of image output, without modifying the format of data to be an object of image output from an existing format.

According to the first embodiment, the image output device 1 has an output mechanism 14 for outputting an image, and an output controller 13 which produces, from image data, control data to be used for controlling an output mechanism and controls the output mechanism on the basis of the control data. As a result, the image supply device 2 can be dispensed with a function for producing, from image data, control data to be used for controlling the output mechanism (e.g., a function included in a conventional printer driver used in a personal computer), and hence the image supply device 2 can be made inexpensive.

According to the first embodiment, when the XML server 63 of the image output device 1 is configured to determine only a tag required to describe the control information pertaining to image output from among the tags described in a markup language, the XML server 64 can be implemented by a small-amount circuit or program, thereby rendering the image output device 1 inexpensive.

According to the first embodiment, when the XML server 93 of the image supply device 2 is configured to determine only a tag required to describe the control information pertaining to image output from among the tags described in a markup language, the XML server 93 can be implemented by a small-amount circuit or program, thereby rendering the image supply device 2 inexpensive.

Like the image output system of the first embodiment, an image output system according to a second embodiment of the invention is arranged to use an extension tag to be used for adding an extended function to a DPS protocol after prescription thereof at the time of generation and exchange of control information. The second embodiment uses an extension tag for adding, to an image output control protocol after prescription and as an extension, a frame-inserted printing function for printing in combination a frame image and an image of image data.

The basic configuration and operation of the image output system of the second embodiment are identical with those of the first embodiment, and hence their explanations are omitted.

The frame-inserted printing function (hereinafter called a "Print Image Framer (PIF) function") will now be described. Printing utilizing the PIF function will be hereinafter referred to as PIF printing.

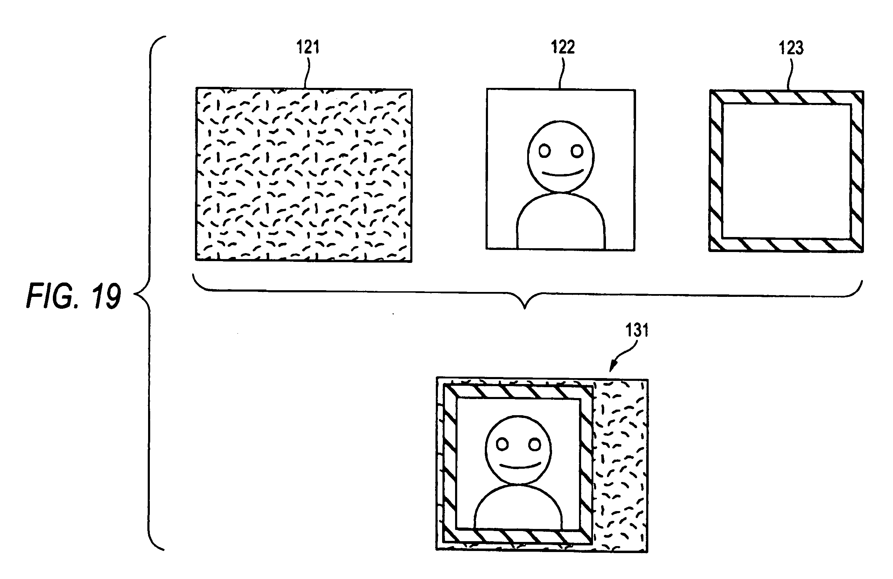

Fig. 18 is a view for describing the concept of the PIF function. Fig. 19 is a view for showing an example print image obtained in the case of PIF printing. As shown in Fig. 18, when the PIF function is used, a plurality of images 121, 122, and 123 are printed in a single image area in a superimposed manner. In such a case, one image 123 is a frame image, and information pertaining to a transparent area where another image 122 is to be displayed (e.g., the position and transparency of the area) is described in frame image data. As shown in Fig. 19, image data pertaining to a background image 121, image data pertaining to the image 122 which is taken as an object of printing, and image data pertaining to the image 123 which is a frame image are merged together, thereby producing image data pertaining to one image 131. The thus-merged image 131 is printed on the basis of the image data.

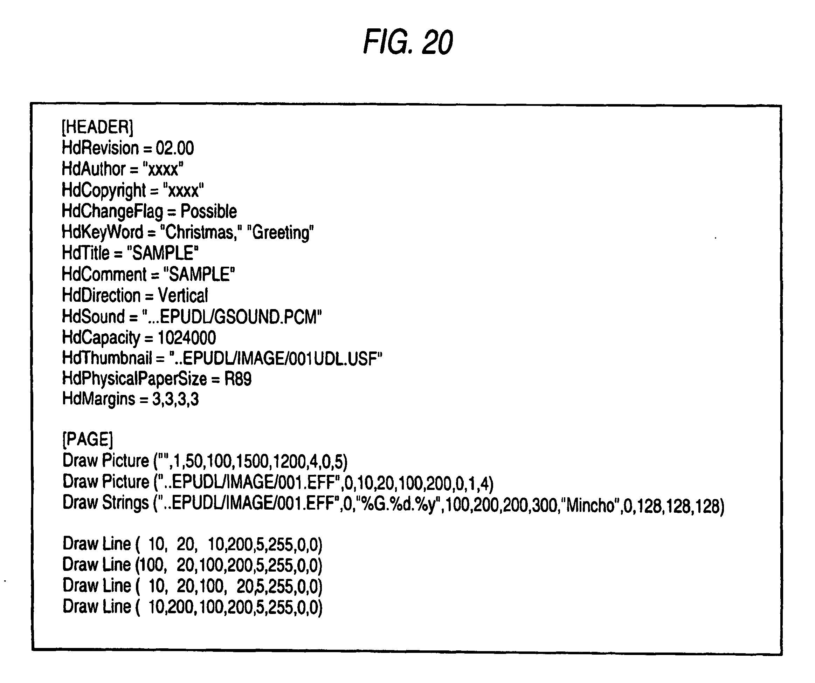

The layout of a target image, a background image, and a frame image obtained at the time of PIF printing is defined by a layout definition file. Fig. 20 is a view showing an example layout definition file. Header information (a portion starting with a head "HEADER") and page information (a portion starting with a head "PAGE") are described in the layout definition file.

The header information includes information about the layout definition file. For instance, the header information includes a variable "HdKeyWord," a variable "HdDirection," a variable "HdSound," a variable "HdThumbnail," a variable "HdPhysicalPaperSize," and a variable "HdMargins."

The variable "HdKeyWord" has, as a value, a specific keyword pertaining to a page layout or a user's desired keyword pertaining to the same. For instance, the variable is described as "Christmas" or "Greeting" in Fig. 20. Characters of a desired character code as well as half-size alphanumeric characters can be used for the keyword. The layout definition file is retrieved on the basis of the keyword(s) determined by the variable "HdKeyWord."

The variable "HdDirection" has, as a value, information about a display direction of the page layout. The display direction is the orientation of a page layout when the page layout is displayed in a finder or display screen of a digital camera or printed. For instance, the variable is defined as a portrait orientation or a landscape orientation.

The variable "HdSound" has, as a value, sound file information; that is, a pointer of a sound file associated with the layout definition file. The value of the variable "HdSound" is defined as, e.g., the name of a sound file (e.g., "GSOUND.PCM" as shown in Fig. 20) and the name of a relative path (e.g., " 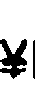 EPUDL 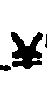 " as shown in Fig. 20). The name of an absolute path may also be used in place of the name of a relative path. A method for representing a file pointer can be made analogous to that employed in the embodiment.

As mentioned above, the layout definition file can be associated with the sound file. For instance, when the layout definition file is output to the outside, the sound file may also be output. The sound file is reproduced at a predetermined time. For instance, when the page layout described in the layout definition file is displayed in the finder or display section of the digital camera or the display section of the printer and when a page design including the page layout is printed, sound or the like recorded in the sound file is automatically reproduced.

The variable "HdThumbnail" has, as a value, thumbnail information or a pointer of an image data file of a thumbnail of the page layout. The thumbnail image is prepared through use of a specific device (a personal computer, a portable cellular phone, a digital camera, or a printer). A list of page layouts where thumbnail images are arranged may be displayed or printed in accordance with the user's operation.

The variable "HdPhysicalPaperSize" has, as a value, physical page size information; that is, a paper size perfectly matching the size of the page layout when the page layout is printed.

The variable "HdMargines" has, as a value, print margin information; that is, information showing the size of a margin of print paper which is to be left at the time of printing of a page layout. For instance, as shown in Fig. 20, when the value of the variable "HdMargines" is set to "3, 3, 3, 3," printing is performed such that a margin of 3 mm is left along the top, bottom, and either side of rectangular paper. Numerals of the print margin are not limited to positive values and may assume zero or negative values. In such a case, printing is performed without formation of margins.

The page information provided in the layout definition file includes information about the attribute of a page layout. For instance, the page information includes a function "Draw Picture," a function "Draw String," a function "Draw Line," or the like.

The function "Draw Picture" is to render an image while information about an image area or the like information is taken as an argument.

A first argument to the function "Draw Picture" is an image file pointer for linking a file of a target image to be applied with an image area.

When the target image is determined at the time of generation of the layout definition file, the value of the image file pointer of the first argument is taken as the file pointer of the target image. When the target image is not determined at the time of generation of the layout definition file, the value is set to null.

When the background image 121 to be applied to the image area of the page layout has been determined in advance, the file pointer of the image is described as the first argument. Alternatively, the type of an image to be applied may be identified by an extension of a file name. For instance, in the case of a background image, the only requirement is to determine the type of an image as an extension "EFF." If the target image has not yet been determined at the time of generation of the layout definition file, a target image is specified within the print job start command.

A second argument to the function "Draw Picture" is a photo ID of the image area. When the image to be applied has not yet been determined, the value of the photo ID is set to an integer of one or more. If the image to be applied has already been determined, the value of the photo ID is set to zero.

Third to sixth arguments to the function "Draw Picture" are X-Y coordinate values of two points located on a diagonal line showing the outer shape of the rectangular image area. The outside shape of the image area is not limited to a rectangle but may assume a shape such as a polygon, a complete circle, or a flat oval. The method for specifying the outside shape of the image area is not limited to a method for describing coordinates, and may be, e.g., a functional expression showing a boundary line.

A seventh argument to the function "Draw Picture" is rotational degree information showing the extent to which an image to be applied to the image area is to be rotated. The rotational degree information can be set within a predetermined area (e.g., 0° to 360°).

An eighth argument to the function "Draw Picture" is a numeral for specifying a fitting rule to be applied to an image. The fitting rule includes, e.g., a rule for applying an image in an unmodified form regardless of whether or not a margin arises in an image area and a rule for applying an image such that a user's desired range is displayed while a user's desired aspect ratio is maintained without causing any margin in the image area.

A ninth argument to the function "Draw Picture" is a numeral for specifying a positioning rule for determining a position in the image area where an image is to be arranged. The positioning rule is, e.g., upper-left-align (a method for aligning the upper left top of an image to the upper left top of an image area) or center-align (a method for aligning the center of an image to the center of an image area).

The function "Draw Strings" of the page information is for rendering ornaments specified by arguments, such as characters or graphics, at the positions specified by the arguments. The structure of the function "Draw Strings" changes depending on the nature of ornaments to be applied to the page layout.

A First argument to the function "Draw Strings" is a pointer of an image file used for application of ornaments. A second argument to the function "Draw Strings" is a photo ID of the image area.

A third argument to the function "Draw Strings" is first ornament information showing details of ornaments. The third argument is described as "%G, %d, %y" in Fig. 20. The value "%G, %d, %y" shows a character string which represents a date on which images of an image file were photographed, the date being described in the image file as use image information. A user's desired character string may be used in place of a character string showing the date of photographing.

Fourth to seventh arguments to the function "Draw Strings" are ornament application position information showing positions where the ornaments specified by the first ornament information are to be located. The fourth to seventh arguments are described as "100, 200, 200, 300" in Fig. 20 in the same format as that according to which the outside of the image area is specified.

Eighth through twelfth arguments to the function "Draw Strings" are second ornament information showing attributes of ornaments to be applied. The eighth through twelfth arguments are shown as "Mincho, 0, 128, 128, 128" in Fig. 20. The attributes described by the eighth through twelfth arguments are attributes of characters showing the date of photographing to be embedded in the above-described position where ornaments are to be applied. Here, the arguments show that a character string showing the date of photographing is described in a "Mincho" font, the size of eight point, an R color of a 128-bit value, a G color of a 128-bit value, and a B color of a 128-bit value.

Of the page information, the function "Draw Line" is for rendering a line to be applied to the page layout. The function "Draw Line" assumes eight arguments, wherein first and second arguments show coordinates of the start point of a line and third and fourth arguments show coordinates of the end point of the line. Fifth to eighth arguments show attribute information about a line to be rendered (e.g., the thickness of a line and RGB values). The fifth to eighth arguments are described as "5, 255, 0, 0" in Fig. 20. The thickness of the line is five points. In relation to the color of the line, the R color assumes a value of 255; the G color assumes a value of 0; and the B color assumes a value of 0.

When PIF printing is to be performed, the previously-described layout definition file is specified by a print job start command. The image output device, such as a printer, merges the plurality of images 121, 122, and 123 in the layout on the basis of the layout definition file. The thus-merged image is printed.

There will now be described a series of processing operations including generation of an XML script serving as control information, in the case where the image output system of the second embodiment performs PIF printing operation.

In the image supply device 2 serving as a digital camera, a CPU 71 performs the following operations in accordance with a predetermined control program. In response to the user's operation, the CPU 71 interprets a layout definition file stored in a recording medium 24 or the like. On the basis of the result of interpretation, a page layout is generated, and the thus-generated page layout is displayed on a display device 26.

Subsequently, when a photographing operation is performed by way of an operation section 25 while the page layout is displayed in a finder or the display device 26, an imaging device 74 stores, as image data, an image captured from the view field of the camera at that point in time. The CPU 71 stores the image data captured by the imaging device 74 into a memory 75 as an image file of predetermined format (e.g., a JPEG format).

Next, the CPU 71 selects image data pertaining to the captured image as an image to be embedded into the image area (i.e., a target image area) in the currently-displayed page layout. The CPU 71 generates a print job start command "DPS_StartJob" to be used for performing PIF printing in response to a layout definition file of the currently-displayed page layout and an image data file of the captured image.

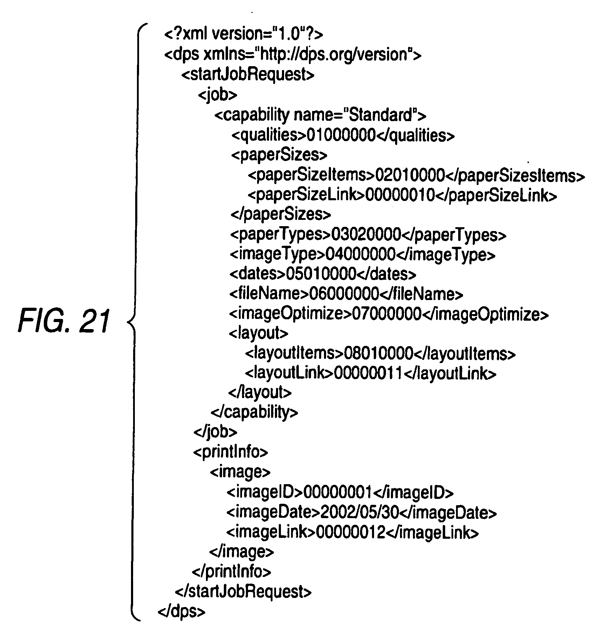

Fig. 21 is a view showing an example print job start command "DPS_StartJob" generated by the image supply device 2.

The print job start command "DPS_StartJob" for PIF printing purpose specifies an object ID of the image data file of the background image 121 by the "paperSizeLink" tag serving as an extension tag. An object ID of the layout definition file is specified by a "layoutLink" tag serving as an extension tag. A data file (e.g., a file of the extension EFF) of the frame image is specified by an "imageLink" tag serving as an extension tag. An object ID of a target image (i.e., the image 122) is specified by an "imageID" tag serving as the existing tag.

Upon receipt of the print job start command "DPS_StartJob", the image output device 1 acquires, from the image supply device 2, image data pertaining to the background image 121, the target image 122, and the frame image 123 and the layout definition file. Merged image data are generated in accordance with the page layout described in the layout definition file. Printing operation is performed on the basis of the image data.

Exchange of the command in the second embodiment can be effected in the same manner as in the first embodiment, and hence its explanation is omitted.

As mentioned above, according to the second embodiment, a tag for specifying frame insertion printing operation which enables combined printing of a frame image and an image of image data can be used as an extension tag. Hence, a function for implementing unique frame insertion printing operation can be added easily.

An image output system according to a third embodiment of the invention is provided with extension tags for adding extended functions to a DPS protocol after prescription of the DPS protocol and uses the extension tags at the time of generation and exchange of control information including extended functions, as in the case of the first and second embodiments. In other respects, the image output system of the third embodiment is identical in configuration and operation with that of any of the embodiments, and hence repetitive explanation is omitted.

In the third embodiment, the image output device 1 stores in advance, for each paper size, a correspondence between a printable paper size (e.g., A4, B5, B4, or the like) and a paper type prepared by a vendor or a third party (e.g., plain paper, dedicated paper, or the like) in, e.g., ROM 43. The size of print paper and a paper type, which are specified by control information pertaining to image output, are examined. When paper of specified paper type and size is not available, a notice to this effect (a kind of control information) is generated through use of an extension tag. The notice is then transmitted to the image supply device 2.

For instance, the image supply device 2 uses, in the print job start command "DPS_StartJob" and as extension tags, a "paperSize" tag for specifying a paper size and a "paperType" tag for specifying a paper type, thereby specifying a paper size and a paper type, respectively. The print job start command "DPS_StartJob" is transmitted to the image output device 1.

Upon receipt of the print job start command "DPS_StartJob", the image output device 1 specifies a paper size specified by the "paperSize" tag and the paper type specified by the "paperType" tag. By reference to information about a correspondence between the previously-stored paper size and the paper type, a determination is made as to whether or not a specified paper type of the specified paper size is available.

When the specified paper type of the specified paper size is available, the image output device 1 attempts to initiate a print job in accordance with the print job start command "DPS_StartJob".

When the specified paper type of the specified paper size is not available, the image output device 1 generates, as control information, an XML script including an extension tag indicating an error notice and sends the control information to the image supply device 2. When the image supply device 2 is of a type capable of addressing the extension tag of the error notice, the image supply device 2 detects a setting error of paper type or size upon receipt of the control information, thereby reporting the error to, e.g., the user.

As mentioned above; according to the third embodiment, the image output device 1 examines the size and type of print paper specified by the control information. If the specified paper of the specified size is not available, control information to this effect is generated through use of the extension tag. The control information is then transmitted to the image supply device 2. As a result, in the case where print paper of specified type (e.g., plain paper, mat paper, or photocopy paper) and specified size is not provided by the vendor or the third party (i.e., the paper is not manufactured or sold), erroneous printing can be hindered.

As a fourth embodiment of the invention, there will be described a case where there are a plurality of image output devices including a printer and a display. In the display, display correction information is provided in advance (at the time of manufacturing) so as to correct an image to be displayed in accordance with PIM information. Accordingly, image data provided with the PIM function is subjected to image processing based on the PIM information and the display correction information, and then displayed. In the printer, the image data provided with the PIM function is subjected to image processing based on the PIM function, and then printed. As a result, in a case where the same image data provided with the PIM function is transmitted from the image supply device to the printer and the display, the printed image and the displayed image are visually recognized as substantially the same one.

As a fifth embodiment of the invention, it is possible to designate arbitrary number of image data to which the extension tag (PIM function) is appended at once. Specifically, when the user designates at least one image data to which the PIM function is to be appended, from the image supply device side or the control panel of the image output device, the extension tag (PIM function) is automatically appended to the designated image data.

As a sixth embodiment of the invention, it is possible to append a plurality of extended functions 'to at least one image data at once. Specifically, when the user designates at least one image data to which at least one PIM function is to be appended, from the image supply device side or the control panel of the image output device, at least one extension tag (PIM function) is automatically appended to the' designated image data.

The previously-described embodiments are preferable examples of the invention. However, the invention is not limited to these embodiments. The invention is susceptible to various modifications or alterations within the scope of the invention.

For instance, in the respective embodiments, control information is described through use of XML which is one of the markup languages. However, another markup language such as SGML (Standard Generalized Markup Language) may be used for describing the control information.

In the previously-described respective embodiments, the PTP and the USB are used at hierarchical levels lower than the DPS protocol level. However, another protocol, such as a TCP/IP (Transmission Control Protocol/Internet Protocol) may also be used. At that time, a LAN cable, Bluetooth, a wireless LAN, or the like may also be used as a transmission medium.

The command names, the tag names, and the extension tag names of the DPS protocol used in the respective embodiments are not limited to those mentioned previously; other names may also be employed. Commands of the DPS protocol may also be embodied by other commands having the same function or a combination thereof. Moreover, the function specified by the extension tag is not limited to that mentioned previously.

In the respective embodiments, the image output device 1 can be embodied as a printer, and the image supply device 2 can be embodied as a digital camera for recording a moving image and/or a still image. Alternatively, the image output device 1 may also be embodied as another recording device for recording an image on a medium such as paper or a display for projecting an image of light such as a display. The image supply device 2 may also be embodied as an electronic device having a built-in digital camera or an electronic device which receives an image signal. Such an electronic device includes a mobile telephone, a PDA, a music player, a TV set, a video recording/reproducing apparatus, a picture phone, a videoconferencing system, etc. Further, the image supply device 2 may be embodied as a device having portability or a device not having much portability.

In the respective embodiments, upon completion of transfer of the image data required for image output from the image supply device 2 to the image output device 1, a notice indicating that connection with the image output device 1 can be released may be transmitted from the image output device 1 to the image supply device 2.

In the respective embodiments, a USB mass storage class may also be employed as the image data file management transfer protocol in place of the PTP.

The images described in connection with the embodiments may be embodied as text images in addition to picture images. Further, the object of image output may be a text, e.g., a title table or lyrics of a music album, such as a music CD or a music MD. In this case, for instance, the image supply device 2 or the image output device 1 acquires text data from a distribution server on the Internet in accordance with the information recorded on a music album.

## Claims

1. A direct printing method performed by a digital camera (2) storing one or more image data files (31) and a printer (1) which are directly connected via a USB cable (3) and which are operable to perform a print operation using DPS protocol the method comprising the steps of
• selecting an extended function for a predetermined function of the DPS protocol;
• confirming whether the extended function is usable in both of the digital camera (2) and the printer (1);
• generating a control information item including a script described by a markup language for specifying the confirmed extended function wherein an extension tag corresponding to the confirmed extended function is inserted into the script while maintaining an existing tag corresponding to the predetermined function of the DPS protocol, in a case where it is confirmed the extended function is usable;
• communicating the control information item between the digital camera (2) and the printer (1) via the USB cable (3);
• transmitting from the digital camera (2) to the printer (1) via the USB cable (3) an image data file (31) described in the script; and
• performing at the printer (1) a print operation of an image based on the received image data file (31) processed according to either image processing specified by the extension tag or, In the case an image output job start command including the extension tag is erroneously received, image processing specified by the existing tag.

2. The direct printing method as set forth in claim 1, wherein the printer (1) performs image processing specified by the extension tag with respect to image data contained in the received image data file (31); and
wherein the printer (1) performs the print operation based on the image data which has been subjected to the image processing.

3. The direct printing method as set forth in claim 2, wherein the image processing is that another image is combined with an original image of the image data.

4. The direct printing method as set forth in claim 3, wherein the another image is a frame image.

5. The direct printing method as set forth in claim 1, wherein the extended function includes a marginless printing function.

6. A direct printing system, comprising a digital camera (2) storing one or more image data files and a printer (1) which are directly connected via a USB cable (3) and which are operable to perform a print operation using DPS protocol,
wherein each of the digital camera (2) and the printer (1) comprises:
a communication controller (12, 22), operable to communicate, between the camera (2) and the printer (1), a control information item for the image processing including a script described by a markup language; and
a script generator (62, 92), operable to confirm whether a selected extended function for a predetermined function of the DPS protocol is usable in both of the digital camera (2) and the printer (1), and operable to generate the script in which an extension tag corresponding to the confirmed extended function is inserted while maintaining an existing tag corresponding to the predetermined function of the DPS protocol, in a case where it is confirmed the extended function is usable,
the direct printing system being adapted
to generate a control information item including a script described by a markup language for specifying the confirmed extended function,
to communicate the control information item between the digital camera (2) and the printer (1) via the USB cable (3),
to transmit from the digital camera (2) to the printer (1) via the USB cable (3) an image data file (31) described in the script, and
to perform at the printer (1) a print operation of an image based on the received image data file (31) processed according to either image processing specified by the extension tag or, in the case an image output job start command including the extension tag is erroneously received, image processing specified by the existing tag.

7. A system according to claim 6, wherein the extended function includes a function for controlling photographing requirements.

8. A printer (1), directly connectable to a digital camera (2) via a USB cable (3), for use in a direct printing system according to claim 6 or 7, the printer (1) being operable to perform a print operation using DPS protocol,
wherein the printer (1) comprises:
a communication controller (12) operable to communicate, between a connected camera (2) and the printer (1), a control information item for image processing including a script described by a markup language; and
a script generator (62), operable to confirm whether a selected extended function for a predetermined function of the DPS protocol is usable in both of the digital camera (2) and the printer (1), and operable to generate the script in which an extension tag corresponding to the confirmed extended function is inserted while maintaining an existing tag corresponding to the predetermined function of the DPS protocol, in a case
where it is confirmed the extended function is usable,
the printer being adapted
to communicate a control information item including a script described by a markup language for specifying the confirmed extended function,
to receive from the digital camera (2) via the USB cable (3) an image data file (31) described in the script, and
to perform a print operation of an image based on the received image data file (31) processed according to either image processing specified by the extension tag or, in the case an image output job start command including the extension tag is erroneously received, image processing specified by the existing tag.

9. A digital camera (2), directly connectable to a printer (1) operable to perform a print operation using DPS protocol via a USB cable (3), for use in a direct printing system according to claim 6 or 7, the digital camera (2) storing one or more image data files (31) and comprising:
a communication controller (22), operable to communicate, between the camera (2) and a connected printer (1), a control information item for the image processing including a script described by a markup language; and
a script generator (92), operable to confirm whether a selected extended function for a predetermined function of the DPS protocol is usable in both of the digital camera (2) and the printer (1), and operable to generate the script in which an extension tag corresponding to the confirmed extended function is inserted while maintaining an existing tag corresponding to the predetermined function of the DPS protocol, in a case where it is confirmed the extended function is usable,
the camera (2) being adapted
to generate a control information item including a script described by a markup language for specifying the confirmed extended function,
to communicate the control information item between the digital camera (2) and the printer (1) via the USB cable (3), and
to transmit to the printer (1) via the USB cable (3) an image data file (31) described in the script, whereby the printer (1) is operable to perform a print operation of an image based on the transmitted image data file (31) processed according to either image processing specified by the extension tag or, in the case an image output job start command including the extension tag is erroneously received, image processing specified by the existing tag.

10. A computer program product comprising a computer program which causes a computer to execute the direct printing method as set forth in claim 1.

## Patentansprüche

1. Direktdruckverfahren, das von einer digitalen Kamera (2), die eine oder mehrere Bilddateien (31) speichert, und einem Drucker (1) ausgeführt wird, die über ein USB-Kabel (3) direkt verbunden sind und die zur Ausführung eines Druckvorgangs unter Verwendung des DPS-Protokolls betreibbar sind, wobei das Verfahren die Schritte aufweist:
• Auswählen einer erweiterten Funktion für eine vorbestimmte Funktion des DPS-Protokolls;
• Bestätigen, ob die erweiterte Funktion sowohl in der digitalen Kamera (2) als auch in dem Drucker (1) verwendbar ist;
• Erzeugen eines Steuerinformationselements, das ein Script enthält, das durch eine Auszeichnungssprache zum Spezifizieren der bestätigten erweiterten Funktion beschrieben ist, wobei eine Erweiterungskennung, die der bestätigten erweiterten Funktion entspricht, in das Script eingeführt ist, wobei eine existierende Kennung, die der vorbestimmten Funktion des DPS-Protokolls entspricht, beibehalten wird, und zwar in einem Fall, bei dem bestätigt ist, dass die erweiterte Funktion verwendbar ist;
• Kommunizieren des Steuerinformationselements zwischen der digitalen Kamera (2) und dem Drucker (1) über das USB-Kabel (3);
• Übertragen einer Bilddatei (31), die in dem Script beschrieben ist, von der digitalen Kamera (2) zu dem Drucker (1) über das USB-Kabel (3); und
• Ausführen eines Druckvorgangs eines Bilds bei dem Drucker (1) auf der Basis der empfangenen Bilddatei (31), die entweder gemäß einer Bildverarbeitung, die durch die Erweiterungskennung spezifiziert ist, oder gemäß einer Bildverarbeitung, die durch die existierende Kennung spezifiziert ist, in dem Fall verarbeitet ist, dass ein Bildausgabeauftrag-Startbefehl, der die Erweiterungskennung enthält, fehlerhaft empfangen worden ist.

2. Direktdruckverfahren nach Anspruch 1, bei dem der Drucker (1) eine Bildverarbeitung, die durch die Erweiterungskennung spezifiziert ist, mit Bezug zu Bilddaten ausführt, die in der empfangenen Bilddatei (31) enthalten sind; und
bei dem der Drucker (1) den Druckvorgang auf der Basis der Bilddaten ausführt, die der Bildverarbeitung unterzogen worden sind.

3. Direktdruckverfahren nach Anspruch 2, bei dem die Bildverarbeitung darin besteht, dass ein weiteres Bild mit einem ursprünglichen Bild der Bilddaten kombiniert wird.

4. Direktdruckverfahren nach Anspruch 3, bei dem das weitere Bild ein Rahmenbild ist.

5. Direktdruckverfahren nach Anspruch 1, bei dem die erweiterte Funktion eine Randlos-Druckfunktion enthält.

6. Direktdrucksystem, das eine digitale Kamera (2), die eine oder mehrere Bilddateien speichert, und einen Drucker (1) umfasst, die über ein USB-Kabel (3) direkt verbunden sind und die zur Ausführung eines Druckvorgangs unter Verwendung des DPS-Protokolls betreibbar sind,
wobei sowohl die digitale Kamera (2) als auch der Drucker (1) jeweils aufweisen:
eine Kommunikationssteuerung (12, 22), die zum Kommunizieren eines Steuerinformationselements einschließlich eines Scripts, das durch eine Auszeichnungssprache beschrieben ist, zwischen der Kamera (2) und dem Drucker (1) betreibbar ist; und
einen Scriptgenerator (62, 92), der betreibbar ist, zu bestätigen, ob eine ausgewählte erweiterte Funktion für eine vorbestimmte Funktion des DPS-Protokolls sowohl in der digitalen Kamera (2) als auch in dem Drucker (1) verwendbar ist, und der zur Generierung des Scripts betreibbar ist, in dem eine Erweiterungskennung, die der bestätigten erweiterten Funktion entspricht, eingefügt ist, wobei eine existierende Kennung, die der vorbestimmten Funktion des DPS-Protokolls entspricht, in einem Fall beibehalten bleibt, bei dem bestätigt ist, dass die erweiterte Funktion verwendbar ist,
wobei das direkte Drucksystem dazu ausgelegt ist,
ein Steuerinformationselement zu generieren, das ein Script enthält, das durch eine Auszeichnungssprache für die Spezifizierung der bestätigten erweiterten Funktion beschrieben ist,
das Steuerinformationselement zwischen der digitalen Kamera (2) und dem Drucker (1) über das USB-Kabel (3) zu kommunizieren,
eine Bilddatei (31), die in dem Script beschrieben ist, von der digitalen Kamera (2) zu dem Drucker (1) über das USB-Kabel (3) zu übertragen, und
bei dem Drucker (1) einen Druckvorgang eines Bilds auf der Basis der empfangenen Bilddatei (31) auszuführen, die entweder gemäß einer Bildverarbeitung, die durch die Erweiterungskennung spezifiziert ist, oder in dem Fall, dass ein Bildausgabeauftrag-Startbefehl, der die Erweiterungskennung enthält, irrtümlich empfangen worden ist, gemäß einer Bildverarbeitung, die durch die existierende Kennung spezifiziert ist, verarbeitet ist.

7. System nach Anspruch 6, bei dem die erweiterte Funktion eine Funktion zum Steuern von Fotografieranforderungen enthält.

8. Drucker (1), der mit einer digitalen Kamera (2) über ein USB-Kabel (3) direkt verbindbar ist und für den Einsatz in einem Direktdrucksystem gemäß dem Anspruch 6 oder 7 ausgelegt ist, wobei der Drucker (1) derart betreibbar ist, dass er einen Druckvorgang unter Verwendung eines DPS-Protokolls ausführt;
wobei der Drucker (1) aufweist:
eine Kommunikationssteuereinrichtung (12) die derart betreibbar ist, dass ein Steuerinformationselement für eine Bildverarbeitung, die ein Script, das durch eine Auszeichnungssprache geschrieben ist, enthält, zwischen einer verbundenen Kamera (2) und dem Drucker (1) kommunizierbar ist; und
einen Scriptgenerator (62), der zur Bestätigung betreibbar ist, ob eine gewählte erweiterte Funktion für eine vorbestimmte Funktion des DPS-Protokolls sowohl in der digitalen Kamera (2) als auch in dem Drucker (1) verwendbar ist, und der derart betreibbar ist, dass das Script generiert wird, indem eine Erweiterungskennung, die der bestätigten erweiterten Funktion entspricht, eingefügt ist, wobei eine existierende Kennung, die der vorbestimmten Funktion des DPS-Protokolls entspricht, in einem Fall beibehalten bleibt, bei dem bestätigt ist, dass die erweiterte Funktion verwendbar ist,
wobei der Drucker dazu ausgelegt ist,
ein Steuerinformationselement, das ein Script enthält, das durch eine Auszeichnungssprache zum Spezifizieren der bestätigten erweiterten Funktion beschrieben ist, zu kommunizieren,
von der digitalen Kamera (2) eine Bilddatei (31), die in dem Script beschrieben ist, über das USB-Kabel (3) zu empfangen, und
einen Druckvorgang eines Bilds auf der Basis der empfangenen Bilddatei (31) auszuführen, die entweder gemäß einer Bildverarbeitung, die durch die Erweiterungskennung spezifiziert ist, oder in dem Fall, dass ein Bildausgabeauftrag-Startbefehl, der die Erweiterungskennung enthält, fehlerhaft empfangen worden ist, gemäß einer Bildverarbeitung auszuführen, die durch die existierende Kennung spezifiziert ist.

9. Digitale Kamera (2), die mit einem Drucker (1), der zur Ausführung eines Druckvorgangs unter Verwendung eines DPS-Protokolls betreibbar ist, über ein USB-Kabel (3) direkt verbindbar ist und für den Einsatz in einem Direktdrucksystem nach Anspruch 6 oder 7 ausgelegt ist, wobei die digitale Kamera (2) eine oder mehrere Bilddateien (31) speichert und umfasst:
eine Kommunikationssteuereinrichtung (22), die dazu betreibbar ist, ein Steuerinformationselement für die Bildverarbeitung, das ein Script umfasst, das durch eine Auszeichnungssprache beschrieben ist, zwischen der Kamera (2) und einem angeschlossenen Drucker (1) zu kommunizieren; und
einen Scriptgenerator (92), der betreibbar ist, zu bestätigen, ob eine ausgewählte erweiterte Funktion für eine vorbestimmte Funktion des DPS-Protokolls sowohl in der digitalen Kamera (2) als auch in dem Drucker (1) verwendbar ist, und der zur Erzeugung des Scripts betreibbar ist, in dem eine Erweiterungskennung, die der bestätigten erweiterten Funktion entspricht, eingefügt ist, wobei eine existierende Kennung, die der vorbestimmten Funktion des DPS-Protokolls entspricht, in einem Fall beibehalten bleibt, bei dem bestätigt ist, dass die erweiterte Funktion verwendbar ist,
wobei die Kamera (2) dazu ausgelegt ist,
ein Steuerinformationselement, das ein Script enthält, das durch eine Auszeichnungssprache zum Spezifizieren der bestätigten erweiterten Funktion beschrieben ist, zu generieren,
das Steuerinformationselement zwischen der digitalen Kamera (2) und dem Drucker (1) über das USB-Kabel (3) zu kommunizieren, und
eine Bilddatei (31), die in dem Script beschrieben ist, über das USB-Kabel (3) zu dem Drucker (1) zu übertragen, wobei der Drucker (1) hierdurch derart betreibbar ist, dass er einen Druckvorgang eines Bilds auf der Basis der übertragenen Bilddatei (31) ausführt, die entweder gemäß einer Bildverarbeitung, die durch die Erweiterungskennung spezifiziert ist, oder in dem Fall, dass ein Bildausgabeauftrag-Startbefehl, der die Erweiterungskennung enthält, fehlerhaft empfangen worden ist, gemäß einer Bildverarbeitung, die durch die existierende Kennung spezifiziert ist, verarbeitet ist.

10. Computerprogrammprodukt, das ein Computerprogramm enthält, das einen Computer dazu veranlasst, das Direktdruckverfahren auszuführen, wie es im Anspruch 1 dargelegt ist.

## Revendications

1. Procédé d'impression directe réalisé par une caméra numérique (2) stockant un ou plusieurs fichiers de données d'image (31) et une imprimante (1) qui sont directement raccordés via un câble USB (3) et qui sont utilisables pour réaliser une opération d'impression en utilisant le protocole DPS, le procédé comprenant les étapes de :
• sélection d'une fonction étendue pour une fonction prédéterminée du protocole DPS ;
• confirmation si la fonction étendue est utilisable dans à la fois la caméra numérique (2) et l'imprimante (1) ;
• génération d'un élément d'informations de commande comprenant un script décrit par un langage de balise pour spécifier la fonction étendue confirmée dans lequel une étiquette d'extension correspondant à la fonction étendue confirmée est insérée dans le script tout en maintenant une étiquette existante correspondant à la fonction prédéterminée du protocole DPS, dans un cas où il est confirmé que la fonction étendue est utilisable ;
• communication de l'élément d'informations de commande entre la caméra numérique (2) et l'imprimante (1) via le câble USB (3) ;
• transmission à partir de la caméra numérique (2) à l'imprimante (1) via le câble USB (3) d'un fichier de données d'image (31) décrit dans le script ; et
• réalisation sur l'imprimante (1) d'une opération d'impression d'une image sur la base du fichier de données d'image reçu (31) traité selon soit un traitement d'image spécifié par l'étiquette d'extension soit, dans le cas où une commande de début de travail de sortie d'image comprenant l'étiquette d'extension est reçue erronément, un traitement d'image spécifié par l'étiquette existante.

2. Procédé d'impression directe selon la revendication 1, dans lequel l'imprimante (1) réalise un traitement d'image spécifié par l'étiquette d'extension par rapport aux données d'image contenues dans le fichier de données d'image reçu (31) ; et
dans lequel l'imprimante (1) réalise l'opération d'impression sur la base des données d'image qui ont été soumises au traitement d'image.

3. Procédé d'impression directe selon la revendication 2, dans lequel le traitement d'image est qu'une autre image est combinée avec une image originale des données d'image.

4. Procédé d'impression directe selon la revendication 3, dans lequel l'autre image est une image de trame.

5. Procédé d'impression directe selon la revendication 1, dans lequel la fonction étendue comprend une fonction d'impression sans marge.

6. Système d'impression directe, comprenant une caméra numérique (2) stockant un ou plusieurs fichiers de données d'image et une imprimante (1) qui sont directement raccordés via un câble USB (3) et qui sont utilisables pour réaliser une opération d'impression en utilisant le protocole DPS,
dans lequel chacune de la caméra numérique (2) et de l'imprimante (1) comprend :
un dispositif de commande de communication (12, 22) utilisable pour communiquer, entre la caméra (2) et l'imprimante (1), un élément d'informations de commande pour le traitement d'image comprenant un script décrit par un langage de balise ; et
un générateur de script (62, 92), utilisable pour confirmer si une fonction étendue sélectionnée pour une fonction prédéterminée du protocole DPS est utilisable dans à la fois la caméra numérique (2) et l'imprimante (1), et utilisable pour générer le script dans lequel une étiquette d'extension correspondant à la fonction étendue confirmée est insérée tout en maintenant une étiquette existante correspondant à la fonction prédéterminée du protocole DPS, dans un cas où il est confirmé que la fonction étendue est utilisable, le système d'impression directe étant adaptée
pour générer un élément d'informations de commande comprenant un script décrit par un langage de balise pour spécifier la fonction étendue confirmée,
pour communiquer l'élément d'informations de commande entre la caméra numérique (2) et l'imprimante (1) via le câble USB (3),
pour transmettre à partir de la caméra numérique (2) à l'imprimante (1) via le câble USB (3) un fichier de données d'image (31) décrit dans le script, et
pour réaliser sur l'imprimante (1) une opération d'impression d'une image sur la base du fichier de données d'image reçu (31) traité selon soit un traitement d'image spécifié par l'étiquette d'extension, soit dans le cas où une commande de début de travail de sortie d'image comprenant l'étiquette d'extension est erronément reçue, un traitement d'image spécifié par l'étiquette existante.

7. Système selon la revendication 6, dans lequel la fonction étendue comprend une fonction pour commander des exigences de photographie.

8. Imprimante (1), raccordable directement à une caméra numérique (2) via un câble USB (3), destinée à être utilisée dans un système d'impression directe selon la revendication 6 ou 7, l'imprimante (1) étant utilisable pour réaliser une opération d'impression utilisant le protocole DPS,
dans lequel l'imprimante (1) comprend :
un dispositif de commande de communication (12) utilisable pour communiquer, entre une caméra raccordée (2) et l'imprimante (1), un élément d'informations de commande pour un traitement d'image comprenant un script décrit par un langage de balise ; et
un générateur de script (62), utilisable pour confirmer si une fonction étendue sélectionnée pour une fonction prédéterminée du protocole DPS est utilisable dans à la fois la caméra numérique (2) et l'imprimante (1), et utilisable pour générer le script dans lequel une étiquette d'extension correspondant à la fonction étendue confirmée est insérée tout en maintenant une étiquette existante correspondant à la fonction prédéterminée du protocole DPS, dans un cas où il est confirmé que la fonction étendue est utilisable,
l'imprimante étant adaptée
pour communiquer un élément d'informations de commande comprenant un script décrit par un langage de balise pour spécifier la fonction étendue confirmée,
pour recevoir de la caméra numérique (2) via le câble USB (3) un fichier de données d'image (31) décrit dans le script, et
pour réaliser une opération d'impression d'une image sur la base du fichier de données d'image reçu (31) traité selon soit un traitement d'image spécifié par l'étiquette d'extension, soit dans le cas où une commande de début de travail de sortie d'image comprenant l'étiquette d'extension est erronément reçue, un traitement d'image spécifié par l'étiquette existante.

9. Caméra numérique (2), raccordable directement à une imprimante (1) utilisable pour réaliser une opération d'impression en utilisant un protocole DPS via un câble USB (3), destinée à être utilisée dans un système d'impression directe selon la revendication 6 ou 7, la caméra numérique (2) stockant un ou plusieurs fichiers de données d'image (31) et comprenant :
un dispositif de commande de communication (22), utilisable pour communiquer, entre la caméra (2) et une imprimante raccordée (1), un élément d'informations de commande pour le traitement d'image comprenant un script décrit par un langage de balise ; et
un générateur de script (92), utilisable pour confirmer si une fonction étendue sélectionnée pour une fonction prédéterminée du protocole DPS est utilisable dans à la fois la caméra numérique (2) et l'imprimante (1), et utilisable pour générer le script dans lequel une étiquette d'extension correspondant à la fonction étendue confirmée est insérée tout en maintenant une étiquette existante correspondant à la fonction prédéterminée du protocole DPS, dans un cas où il est confirmé que la fonction étendue est utilisable,
la caméra (2) étant adaptée
pour générer un élément d'informations de commande comprenant un script décrit par un langage de balise pour spécifier la fonction étendue confirmée,
pour communiquer l'élément d'informations de commande entre la caméra numérique (2) et l'imprimante (1) via le câble USB (3), et
pour transmettre à l'imprimante (1) via le câble USB (3) un fichier de données d'image (31) décrit dans le script, où l'imprimante (1) est utilisable pour réaliser une opération d'impression d'une image sur la base du fichier de données d'image transmis (31) traité selon soit un traitement d'image spécifié par l'étiquette d'extension, soit dans le cas où une commande de début de travail de sortie d'image comprenant l'étiquette d'extension est erronément reçue, un traitement d'image spécifié par l'étiquette d'extension.

10. Produit de système informatique comprenant un programme informatique qui conduit l'ordinateur à exécuter le procédé d'impression directe selon la revendication (1).
